(19) Europäisches Patentamt / European Patent Office / Office européen des brevets

(11) **EP 4 318 995 A1**

(12) **EUROPEAN PATENT APPLICATION**
published in accordance with Art. 153(4) EPC

(43) Date of publication:
**07.02.2024 Bulletin 2024/06**

(21) Application number: **22803790.9**

(22) Date of filing: **06.05.2022**

(51) International Patent Classification (IPC):
**H04L 1/00** (2006.01)          **H04W 52/02** (2009.01)
**H04B 1/10** (2006.01)

(52) Cooperative Patent Classification (CPC):
**H04B 1/10; H04L 1/00; H04W 52/02;** Y02D 30/70

(86) International application number:
**PCT/CN2022/091129**

(87) International publication number:
**WO 2022/242466 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.05.2021 CN 202110560345**

(71) Applicant: **Huawei Technologies Co., Ltd.
Longgang
Shenzhen, Guangdong 518129 (CN)**

(72) Inventors:
• HUO, Qiang
  **Shenzhen, Guangdong 518129 (CN)**
• WANG, Jinglun
  **Shenzhen, Guangdong 518129 (CN)**
• ZOU, Zhiqiang
  **Shenzhen, Guangdong 518129 (CN)**
• LI, Huajia
  **Shenzhen, Guangdong 518129 (CN)**
• JIANG, Peigang
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION PROCESSING METHOD AND APPARATUS**

(57)     Embodiments of this application disclose a communication processing method and apparatus, to avoid time consumption and energy consumption overheads caused by beam scanning by a communication device, and reduce energy consumption overheads of the communication device. The method in embodiments of this application includes: generating at least two first signals based on a first precoding weight, where the first precoding weight is related to first nonlinear interference channel information, the first nonlinear interference channel information is determined based on a first nonlinear interference signal, and the first nonlinear interference signal is a nonlinear interference signal obtained through excitation of a first nonlinear interference source by at least two second signals; and outputting the at least two first signals, where the at least two first signals are used to excite a second nonlinear interference signal, and the second nonlinear interference signal is a nonlinear interference signal obtained through excitation of a second nonlinear interference source by the at least two first signals.

FIG. 2A

201 Generate at least two first signals based on a first precoding weight
202 Output the at least two first signals
203 Receive a second nonlinear interference signal
204 Determine second nonlinear interference channel information based on the second nonlinear interference signal

**Description**

This application claims priority to Chinese Patent Application No. 202110560345.2, filed with the China National Intellectual Property Administration on May 21, 2021 and entitled "COMMUNICATION PROCESSING METHOD AND APPARATUS", which is incorporated herein by reference in its entirety.

**TECHNICAL FIELD**

This application relates to the field of communication technologies, and in particular, to a communication processing method and apparatus.

**BACKGROUND**

A nonlinear interference source is an important factor that limits a capacity of a communication system. For example, typical nonlinear interference includes passive inter-modulation (passive inter-modulation, PIM) interference. Passive inter-modulation in the communication system is inter-modulation effect caused by nonlinearity of a passive device that works under conditions of high-power signals with a plurality of frequencies. The passive device may include a connector, a feeder, an antenna, a filter, and the like. A new-frequency passive inter-modulation signal is generated through passive inter-modulation. When the passive inter-modulation signal falls within a receive frequency range of a receive antenna of a surrounding device, the passive inter-modulation signal causes interference to the communication system. Therefore, how to obtain information about a nonlinear interference source is an urgent problem to be resolved currently.

Channel information of the nonlinear interference source may be obtained in the following solution. A base station sends at least two downlink signals on each downlink beam in a preset downlink beam set. The at least two downlink signals pass through the nonlinear interference source to generate a nonlinear interference signal. The base station receives the nonlinear interference signals, and selects a downlink beam corresponding to a nonlinear interference signal with a largest power. Then, the base station estimates the channel information of the nonlinear interference source based on the downlink beam.

It can be learned from the foregoing that, in the foregoing technical solution, the base station needs to design a huge quantity of refined downlink beam sets. The base station needs to scan beams to determine the downlink beam set. Consequently, a long time needs to be consumed by the base station to scan the beams, and energy consumption overheads caused by beam scanning are high.

**SUMMARY**

Embodiments of this application provide a communication processing method and apparatus, to avoid time consumption and energy consumption overheads caused by beam scanning by a communication device, and reduce energy consumption overheads of the communication device.

A first aspect of embodiments of this application provides a communication processing method. This method may be performed by a communication device. For example, the communication device may be a network device or a terminal device. Alternatively, the method may be performed by a component of the communication device, for example, a processor, a chip, or a chip system. Alternatively, the method is implemented by a logic module or software that can implement all or some functions of the communication device. The method includes:

generating at least two first signals based on a first precoding weight, where the first precoding weight is related to first nonlinear interference channel information, the first nonlinear interference channel information is determined based on a first nonlinear interference signal, and the first nonlinear interference signal is a nonlinear interference signal obtained through excitation of a first nonlinear interference source by at least two second signals; and outputting the at least two first signals, where the at least two first signals are used to excite a second nonlinear interference signal. The second nonlinear interference signal is a nonlinear interference signal obtained through excitation of a second nonlinear interference source by the at least two first signals.

In the foregoing technical solution, the at least two first signals are generated based on the first precoding weight, and the at least two first signals are output. The first precoding weight is related to the first nonlinear interference channel information. That is, the first precoding weight is obtained based on the first nonlinear interference channel information. The communication device does not need to determine a downlink transmit beam in a beam scanning manner. In this way, time consumption caused by beam scanning is avoided, and energy consumption overheads caused by beam scanning are avoided. Energy consumption overheads of the communication device are reduced.

In a possible implementation, the method further includes: receiving the second nonlinear interference signal; and determining second nonlinear interference channel information based on the second nonlinear interference signal.

In the foregoing implementation, the second nonlinear interference signal is received to obtain the second nonlinear interference channel information. In this way, nonlinear interference channel information is obtained. The first precoding weight is related to the first nonlinear interference channel information. In this way, accuracy of the second nonlinear interference channel information can be improved.

In another possible implementation, the first nonlinear interference source is partially or completely the same as the second nonlinear interference source.

In this possible implementation, the first nonlinear interference channel information is determined based on the first nonlinear interference signal, and the first nonlinear interference signal is the nonlinear interference signal obtained through excitation of the first nonlinear interference source by the at least two second signals. The second nonlinear interference channel information is determined based on the second nonlinear interference signal, and the second nonlinear interference signal is the nonlinear interference signal obtained through excitation of the second nonlinear interference source by the at least two first signals. The first nonlinear interference source is partially or completely the same as the second nonlinear interference source. The first precoding weight is related to the first nonlinear interference channel information. This helps obtain more accurate nonlinear interference channel information.

In another possible implementation, the first nonlinear interference channel information indicates a first covariance matrix, the first covariance matrix is a covariance matrix of channels between transmit antennas and the first nonlinear interference source, the first covariance matrix is an N*N-dimensional matrix, N is a quantity of the transmit antennas, N is an integer greater than or equal to 2, and the first precoding weight is obtained based on the first covariance matrix.

In this possible implementation, the first covariance matrix includes nonlinear interference channel information in a plurality of signal transmission directions. The first precoding weight is determined based on the first covariance matrix. This helps the communication device obtain more accurate nonlinear interference channel information. In addition, the communication device does not need to perform beam scanning, so that energy consumption overheads caused by beam scanning are reduced.

In another possible implementation, the first nonlinear interference channel information indicates a first interference space, the first interference space is a channel space between transmit antennas and the first nonlinear interference source, and the first precoding weight is obtained based on the first interference space.

In this possible implementation, each column vector in the first interference space includes nonlinear interference channel information in a corresponding signal transmission direction. The first precoding weight is determined based on the first interference space. This helps the communication device obtain more accurate nonlinear interference channel information. The communication device does not need to perform beam scanning, so that energy consumption overheads caused by beam scanning are reduced.

In another possible implementation, the first nonlinear interference channel information indicates a first interference channel, the first interference channel is a channel between transmit antennas and the first nonlinear interference source, and the first precoding weight is obtained based on the first interference channel.

In this possible implementation, each column vector in the first interference channel includes nonlinear interference channel information in a corresponding signal transmission direction. The first precoding weight is obtained based on the first interference channel. This helps the communication device obtain more accurate nonlinear interference channel information. The communication device does not need to perform beam scanning, so that energy consumption overheads caused by beam scanning are reduced.

In another possible implementation, the method further includes:

when a first condition is met, outputting the second nonlinear interference channel information, where
the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

In this possible implementation, when the first condition is met, the second nonlinear interference channel information is output. The communication device obtains the nonlinear interference channel information by using an iteration process. When the iteration process converges, the second nonlinear interference channel information is output. This helps improve accuracy of the second nonlinear interference channel information obtained by the communication device.

In another possible implementation, the method further includes:

when a first condition is not met, generating at least two third signals based on a second precoding weight, where
the second precoding weight is related to the second nonlinear interference channel information;
outputting the at least two third signals, where

the at least two third signals are used to excite a third nonlinear interference signal, and the third nonlinear interference signal is a nonlinear interference signal obtained through excitation of a third nonlinear interference source by the at least two third signals;

receiving the third nonlinear interference signal; and

determining third nonlinear interference channel information based on the third nonlinear interference signal, where the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

In this possible implementation, when convergence is not achieved, the iteration process may continue to be performed. In this way, accuracy of the nonlinear interference channel information obtained by the communication device is improved.

In another possible implementation, the first precoding weight is obtained based on a first initial precoding weight and a first interference weight, and the first initial precoding weight and the first interference weight are obtained based on the first nonlinear interference channel information.

In this possible implementation, when obtaining nonlinear interference channel information in a signal transmission direction, the communication device should consider interference in the signal transmission direction. Therefore, the communication device may determine the first precoding weight with reference to the first initial precoding weight and the first interference weight. The first initial precoding weight and the first interference weight are obtained based on the first nonlinear interference channel information. This helps improve accuracy of the nonlinear interference channel information obtained by the communication device.

In another possible implementation, the method further includes:

if a first condition is not met, generating at least two fourth signals based on a third precoding weight, where the third precoding weight is related to the second nonlinear interference channel information;

outputting the at least two fourth signals, where

the at least two fourth signals are used to excite a fourth nonlinear interference signal, and the fourth nonlinear interference signal is a nonlinear interference signal obtained through excitation of a fourth nonlinear interference source by the at least two fourth signals;

receiving the fourth nonlinear interference signal; and

obtaining fourth nonlinear interference channel information based on the fourth nonlinear interference signal, where the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

In this possible implementation, when iteration in a signal transmission direction does not reach convergence, an iteration process may continue to be performed. In this way, accuracy of the nonlinear interference channel information obtained by the communication device is improved.

In another possible implementation, the method further includes:

when nonlinear interference channel information in N signal transmission directions is not obtained, generating at least two fifth signals based on a fourth precoding weight, where each signal transmission direction corresponds to one precoding weight, the fourth precoding weight is related to the first nonlinear interference channel information, and N is a quantity of transmit antennas;

outputting the at least two fifth signals, where

the at least two fifth signals are used to excite a fifth nonlinear interference signal, and the fifth nonlinear interference signal is a nonlinear interference signal obtained through excitation of a fifth nonlinear interference source by the at least two fifth signals;

receiving the fifth nonlinear interference signal; and

determining fifth nonlinear interference channel information based on the fifth nonlinear interference signal.

In this possible implementation, if the communication device does not obtain the nonlinear interference channel information in the N signal transmission directions, the communication device may continue to perform communication processing in this application, to obtain the nonlinear interference channel information in the N signal transmission directions.

In another possible implementation, the first nonlinear interference channel information indicates a first covariance matrix, the first covariance matrix is a covariance matrix of channels between transmit antennas and the first nonlinear interference source, the first covariance matrix is an N*N matrix, N is the quantity of the transmit antennas, N is an integer greater than or equal to 2, and the first initial precoding weight is obtained based on the first covariance matrix.

In this possible implementation, the first covariance matrix includes nonlinear interference channel information in a plurality of signal transmission directions. The first initial precoding weight is obtained based on the first covariance matrix. This helps the communication device obtain more accurate nonlinear interference channel information. In addition, the communication device does not need to perform beam scanning, so that energy consumption overheads caused by beam scanning are reduced.

In another possible implementation, the first nonlinear interference channel information indicates a first interference space, the first interference space is an interference space between the transmit antennas and the first nonlinear interference source, and the first initial precoding weight is obtained based on the first interference space.

In this possible implementation, each column vector in the first interference space corresponds to one signal transmission direction. Each column vector in the first interference space includes nonlinear interference channel information in a corresponding signal transmission direction. The first initial precoding weight is obtained based on the first interference space. This helps the communication device obtain more accurate nonlinear interference channel information. In addition, the communication device does not need to perform beam scanning, so that energy consumption overheads caused by beam scanning are reduced.

In another possible implementation, the first nonlinear interference channel information indicates a first interference channel, the first interference channel is a channel between transmit antennas and the first nonlinear interference source, and the first initial precoding weight is obtained based on the first interference channel.

In this possible implementation, each column vector in the first interference channel corresponds to one signal transmission direction. Each column vector in the first interference channel includes nonlinear interference channel information in a corresponding signal transmission direction. The first initial precoding weight is obtained based on the first interference channel. This helps the communication device obtain more accurate nonlinear interference channel information. In addition, the communication device does not need to perform beam scanning, so that energy consumption overheads caused by beam scanning are reduced.

In another possible implementation, the first initial precoding weight is obtained based on the first nonlinear interference signal.

In this possible implementation, the first initial precoding weight is obtained based on the first nonlinear interference signal. This helps obtain more accurate nonlinear interference channel information. In addition, the communication device does not need to perform beam scanning, so that energy consumption overheads caused by beam scanning are reduced.

In another possible implementation, the second nonlinear interference channel information indicates at least one of the following:

a second covariance matrix, a third covariance matrix, a second interference space, a third interference space, a second interference channel, and a third interference channel, where

the second covariance matrix is a covariance matrix of channels between the transmit antennas and the second nonlinear interference source, and the third covariance matrix is a covariance matrix of channels between the second nonlinear interference source and receive antennas;

the second interference space is a channel space between the transmit antennas and the second nonlinear interference source, and the third interference space is a channel space between the second nonlinear interference source and the receive antennas; and

the second interference channel is a channel between the transmit antennas and the second nonlinear interference source, and the third interference channel is a channel between the second nonlinear interference source and the receive antennas.

In this possible implementation, content indicated by the second nonlinear interference channel information is provided, and channel information of a nonlinear interference source, for example, a spatial direction of the nonlinear interference source, may be determined based on the content indicated by the second nonlinear interference channel information.

In another possible implementation, the method further includes: avoiding, based on the second nonlinear interference channel information, the second nonlinear interference source during signal transmission; or skipping receiving a signal on a frequency on which the second nonlinear interference signal is located; or determining, based on the second nonlinear interference channel information, frequency bands to which different users belong, and scheduling corresponding users by using the frequency bands.

In this possible implementation, the communication device obtains the second nonlinear interference channel information by using the foregoing communication processing method, and the communication device may effectively suppress or avoid the second nonlinear interference signal with reference to the second nonlinear interference channel information, to improve communication performance.

A second aspect of embodiments of this application provides a communication processing apparatus. The communication processing apparatus has a function of performing the communication processing method shown in the first aspect. The function may be implemented by hardware, or may be implemented by hardware executing corresponding software. The hardware or the software includes one or more modules corresponding to the foregoing function.

A third aspect of embodiments of this application provides a communication processing apparatus. The communication processing apparatus includes a processor, the processor is coupled to a memory, the memory is configured to store a program or instructions, and when the program or the instructions are executed by the processor, the communication processing apparatus is enabled to perform the method according to any implementation of the first aspect.

A fourth aspect of embodiments of this application provides a computer-readable medium, configured to store a computer program or instructions. When the computer program or the instructions are executed, a computer is enabled to perform the method according to any implementation of the first aspect.

A fifth aspect of embodiments of this application provides a chip system. The chip system includes a processor, configured to support a network device in implementing a function in the first aspect, for example, sending or processing a signal and/or information in the foregoing method. In a possible design, the chip system further includes a memory. The memory is configured to store program instructions and data that are necessary for the network device. The chip system may include a chip, or may include a chip and another discrete component.

A sixth aspect of embodiments of this application provides a computer program product including computer instructions. When the computer program product is run on a computer, the computer is enabled to perform any implementation of the first aspect.

It can be learned from the foregoing technical solutions that embodiments of this application have the following advantages:

It can be learned based on the foregoing technical solutions that, the at least two first signals are generated based on the first precoding weight, where the first precoding weight is related to the first nonlinear interference channel information, the first nonlinear interference channel information is determined based on the first nonlinear interference signal, and the first nonlinear interference signal is the nonlinear interference signal obtained through excitation of the first nonlinear interference source by the at least two second signals. Then, the at least two first signals are output. The at least two first signals are used to excite the second nonlinear interference signal. The second nonlinear interference signal is the nonlinear interference signal obtained through excitation of the second nonlinear interference source by the at least two first signals. It can be learned based on the foregoing that, based on the foregoing technical solutions, the at least two first signals are generated based on the first precoding weight, and the at least two first signals are output. The first precoding weight is related to the first nonlinear interference channel information. That is, the first precoding weight is obtained based on the first nonlinear interference channel information. The communication device does not need to determine a downlink transmit beam in a beam scanning manner. In this way, time consumption caused by beam scanning is avoided, and energy consumption overheads caused by beam scanning are avoided. Energy consumption overheads of the communication device are reduced.

**BRIEF DESCRIPTION OF DRAWINGS**

FIG. 1A is a schematic diagram of an application scenario according to an embodiment of this application;
FIG. 1B is a schematic diagram of another application scenario according to an embodiment of this application;
FIG. 2A is a schematic diagram of an embodiment of a communication processing method according to an embodiment of this application;
FIG. 2B is a schematic diagram of another embodiment of a communication processing method according to an embodiment of this application;
FIG. 3 is a schematic diagram of another embodiment of a communication processing method according to an embodiment of this application;
FIG. 4 is a schematic diagram of effect of a communication processing method according to an embodiment of this application;
FIG. 5A is a schematic diagram of another embodiment of a communication processing method according to an embodiment of this application;
FIG. 5B is a schematic diagram of another embodiment of a communication processing method according to an embodiment of this application;
FIG. 6 is another schematic diagram of effect of a communication processing method according to an embodiment of this application;

FIG. 7 is another schematic diagram of effect of a communication processing method according to an embodiment of this application;

FIG. 8 is a schematic diagram of another embodiment of a communication processing method according to an embodiment of this application;

FIG. 9 is a schematic diagram of another embodiment of a communication processing method according to an embodiment of this application;

FIG. 10 is a schematic diagram of another embodiment of a communication processing method according to an embodiment of this application;

FIG. 11 is a schematic diagram of another embodiment of a communication processing method according to an embodiment of this application;

FIG. 12 is a schematic diagram of a structure of a communication processing apparatus according to an embodiment of this application;

FIG. 13 is a schematic diagram of a structure of a terminal device according to an embodiment of this application; and

FIG. 14 is a schematic diagram of another structure of a communication processing apparatus according to an embodiment of this application.

## DESCRIPTION OF EMBODIMENTS

Embodiments of this application provide a communication processing method and apparatus, to avoid time consumption and energy consumption overheads caused by beam scanning by a communication device, and reduce energy consumption overheads of the communication device.

The following clearly describes the technical solutions in embodiments of this application with reference to the accompanying drawings in embodiments of this application. It is clear that the described embodiments are merely some but not all of embodiments of this application. All other embodiments obtained by a person of skilled in the art based on embodiments of this application without creative efforts shall fall within the protection scope of this application.

The following describes mathematical symbols in this application.

1. $E^H$ is conjugate transposition of $E$.

2. $|J|$ is a modulo operation of $J$.

3. $Q^T$ is transposition of $Q$.

4. $[I]^+$ represents a pseudo-inverse operation on a matrix $[I]$.

5. $p^*$ represents that $p$ is conjugated.

Embodiments of this application provide a communication processing method. This method may be applied to a communication system. The communication system includes but is not limited to a 4th generation (4th generation, 4G) communication system, a 4.5G communication system, a 5G communication system, a 5.5G communication system, a 6G communication system, a device to device (device to device, D2D) communication system, a vehicle to everything (vehicle to everything, V2X) communication system, a system integrating a plurality of communication systems, or a future evolved communication system. The communication system includes, for example, a long term evolution (long term evolution, LTE) system, a new radio (new radio, NR) system, a wireless-fidelity (wireless-fidelity, Wi-Fi) system, a communication system related to the 3rd generation partnership project (3rd generation partnership project, 3GPP), and another communication system of this type.

In a possible implementation, the communication system includes a terminal device. Optionally, the communication system further includes a network device.

In this application, the terminal device is a device having a wireless transceiver function, and may be deployed on land including an indoor or outdoor environment, in a handheld, wearable, or in-vehicle manner, or may be deployed on a water surface (for example, in a ship), or may be deployed in air (for example, on an airplane, in a balloon, or on a satellite). The terminal device may be a mobile phone (mobile phone), a tablet computer (Pad), a computer with a wireless transceiver function, a virtual reality (virtual reality, VR) terminal device, an augmented reality (augmented reality, AR) terminal device, a terminal device in industrial control (industrial control), an in-vehicle terminal device, a terminal device in self driving (self driving), a terminal device in driving assistance, a terminal device in remote medical (remote medical), a terminal device in a smart grid (smart grid), a terminal device in transportation safety (transportation safety), a terminal device in a smart city (smart city), a terminal device in a smart home (smart home), or the like. An application scenario is not limited in embodiments of this application. The terminal device sometimes may also be referred to as a terminal, user equipment (user equipment, UE), an access terminal device, an in-vehicle terminal, an industrial control terminal, a LTE unit, a LTE station, a mobile station, a remote station, a remote terminal device, a mobile device, a wireless communication device, a machine terminal, a UE agent, a UE apparatus, or the like. The terminal device may be fixed or mobile.

By way of example instead of limitation, in this application, the terminal device may be a wearable device. The wearable device may also be referred to as a wearable intelligent device, and is a general term of a wearable device that is intelligently designed and developed for daily wear with a wearable technology, for example, glasses, gloves, a watch, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some of functions without depending on a smartphone, for example, a smart watch or smart glasses, and includes a device that is dedicated to only one type of application function and needs to collaboratively work with another device such as a smartphone, for example, various smart bands or smart jewelry for monitoring physical signs.

In this application, the terminal device may be a terminal device in an Internet of Things (Internet of Things, IoT) system. An IoT is an important part in development of future information technologies. A main technical feature of the IoT is to connect an object to a network by using a communication technology, to implement an intelligent network of human-machine interconnection and thing-thing interconnection. The terminal device in this application may be a terminal device in machine type communication (machine type communication, MTC). The terminal device in this application may be a vehicle-mounted module, a vehicle-mounted component, a vehicle-mounted chip, or a vehicle-mounted unit that is built in a vehicle as one or more components or units. The vehicle may implement methods in this application by using the vehicle-mounted module, the vehicle-mounted component, the vehicle-mounted chip, or the vehicle-mounted unit that is built in the vehicle. Therefore, embodiments of this application may be applied to the Internet of Vehicles, for example, vehicle to everything (vehicle to everything, V2X), long term evolution-vehicle (long term evolution-vehicle, LTE-V), and vehicle to vehicle (vehicle to vehicle, V2V).

In this application, the network device may be any device having a wireless transceiver function. The network device includes but is not limited to: an evolved NodeB (NodeB or eNB or e-NodeB, evolved NodeB) in LTE, a base station (gNodeB or gNB) or a transmission reception point (transmission receiving point/transmission reception point, TRP) in NR, a base station that subsequently evolves in 3GPP, and an access node, a wireless relay node, and a wireless backhaul node in a Wi-Fi system, and the like. The base station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs.

The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a machine communication device, a vehicular device, or the like. The following provides description by using an example in which the network device is a base station. The plurality of network devices may be base stations of a same type, or may be base stations of different types. The base station may communicate with a terminal device, or may communicate with a terminal device by using a relay station. The terminal device may communicate with a plurality of base stations that use different technologies. For example, the terminal device may communicate with a base station supporting an LTE network, or may communicate with a base station supporting a 5G network, or may support dual connections to the base station supporting the LTE network and the base station supporting the 5G network. It may be understood that all or some functions of the network device in this application may also be implemented through a software function running on hardware, or may be implemented through an instantiated virtualization function on a platform (for example, a cloud platform).

The following describes two possible application scenarios of the communication processing method in embodiments of this application. This application is still applicable to another application scenario. This is not specifically limited in this application.

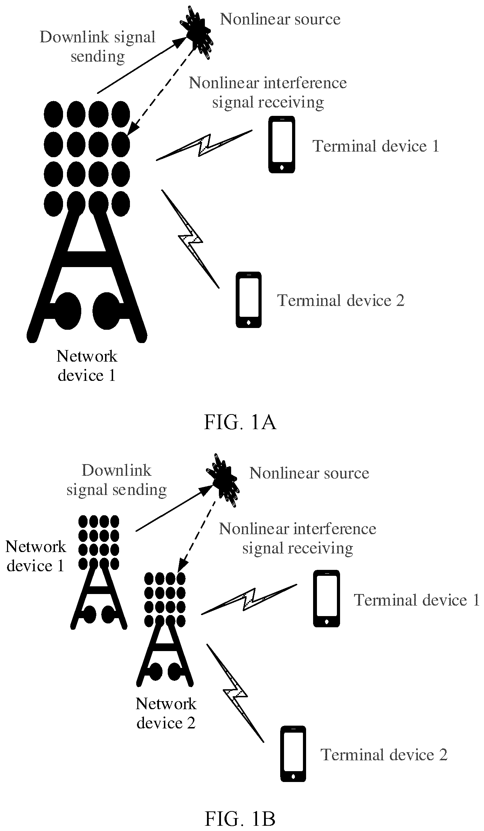

FIG. 1A is a schematic diagram of an application scenario of a communication processing method according to an embodiment of this application. In FIG. 1A, a communication system includes a network device and terminal devices. A network device 1 separately performs communication transmission with a terminal device 1 and a terminal device 2. The network device 1 sends a downlink signal. The downlink signal excites a nonlinear interference source to obtain a nonlinear interference signal. The network device 1 receives the nonlinear interference signal, and determines nonlinear interference channel information based on the nonlinear interference signal.

In the application scenario shown in FIG. 1A, the nonlinear interference source and the network device 1 are independent of each other. In actual application, the nonlinear interference source may alternatively be a nonlinear interference source on the network device 1. This is not specifically limited in this application. For example, the nonlinear interference source is a connector or a feeder on an antenna of the network device 1.

FIG. 1B is a schematic diagram of another application scenario of a communication processing method according to an embodiment of this application. In FIG. 1B, a communication system includes network devices and terminal devices. A network device 2 separately performs communication transmission with a terminal device 1 and a terminal device 2. The network device 1 sends a downlink signal. The downlink signal excites a nonlinear interference source to obtain a nonlinear interference signal. The network device 2 receives the nonlinear interference signal, and determines nonlinear interference channel information based on the nonlinear interference signal.

An execution body of the communication processing method in embodiments of this application may be a communication device. The communication device may be a network device (such as a base station) or a terminal (such as user equipment (user equipment, UE)). Alternatively, the execution body of the communication processing method may be a module, a processor, a chip, or a chip system in a network device. For example, the network device is a base station, and the base station includes a plurality of modules, which are respectively an antenna, a baseband unit (baseband unit, BBU), and an active antenna unit (active antenna unit, AAU). The communication device may be a BBU, or the communication device may include a BBU and an AAU. Alternatively, the execution body of the communication processing method may be a processor, a chip, or a chip system in a terminal device. Alternatively, the execution body of the communication processing method in embodiments of this application may be a logic module or software that implements all or some functions of the communication device. The following provides description by using an example in which the execution body is the communication device.

The following describes the technical solutions of this application with reference to specific embodiments.

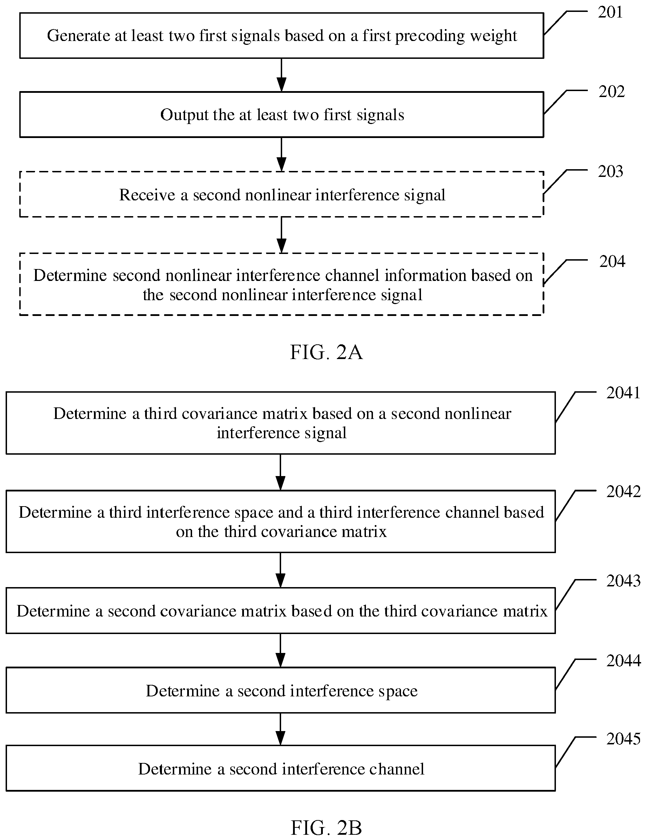

FIG. 2A is a schematic diagram of an embodiment of a communication processing method according to an embodiment of this application. In FIG. 2A, the communication processing method includes the following steps.

201: Generate at least two first signals based on a first precoding weight.

The first precoding weight is related to first nonlinear interference channel information. The first nonlinear interference channel information is determined based on a first nonlinear interference signal. The first nonlinear interference signal is a nonlinear interference signal obtained through excitation of a first nonlinear interference source by at least two second signals.

In some implementations, the first nonlinear interference source includes an active device and a passive device. For example, the passive device may be a connector, a feeder, an antenna, a filter, or the like. The active device may be a power amplifier.

For example, the first nonlinear interference signal may be a nonlinear interference signal obtained through excitation of the power amplifier by the at least two second signals.

For example, the first nonlinear interference signal may be a nonlinear interference signal obtained through excitation of the passive device by the at least two second signals. The nonlinear interference signal generated through excitation of the passive device may include a passive inter-modulation (passive inter-modulation, PIM) interference signal. Passive inter-modulation is inter-modulation effect caused by nonlinearity of the passive device that works under conditions of signals with a plurality of frequencies.

The first precoding weight may be determined by the communication device, or may be obtained from another communication device. This is not specifically limited in this application. For example, the communication device obtains the first nonlinear interference channel information. The communication device determines the first precoding weight based on the first nonlinear interference channel information.

It should be noted that the communication device obtains the first nonlinear interference channel information in a plurality of manners. This is not specifically limited in this application.

For example, the communication device obtains the first nonlinear interference channel information from another communication device.

For example, the communication device receives the first nonlinear interference signal. The communication device determines the first nonlinear interference channel information based on the first nonlinear interference signal.

In some implementations, the first nonlinear interference channel information may include nonlinear interference channel information in a plurality of signal transmission directions. The plurality of signal transmission directions include spatial directions in which nonlinear interference sources in some or all signal transmission spaces covered by transmit antennas of the communication device are located.

For example, the communication device transmits the at least two second signals in all transmit spaces covered by the transmit antennas of the communication device. The communication device receives nonlinear interference signals of nonlinear interference sources in six signal transmission directions. The communication device obtains nonlinear interference channel information in the six signal transmission directions based on the nonlinear interference signals. That is, the first nonlinear interference channel information includes the nonlinear interference channel information in the six signal transmission directions.

For example, the communication device transmits the at least two second signals in three signal transmission directions covered by the transmit antennas of the communication device. The communication device receives nonlinear interference signals of nonlinear interference sources in the three signal transmission directions, and obtains nonlinear interference channel information in the three signal transmission directions based on the nonlinear interference signals. That is, the first nonlinear interference channel information includes the nonlinear interference channel information in the three signal transmission directions.

In step 201, the first precoding weight includes precoding weights corresponding to the plurality of signal transmission directions covered by the transmit antennas of the communication device; or the first precoding weight includes a precoding weight corresponding to one signal transmission direction covered by the transmit antennas of the communication device. This is not specifically limited in this application.

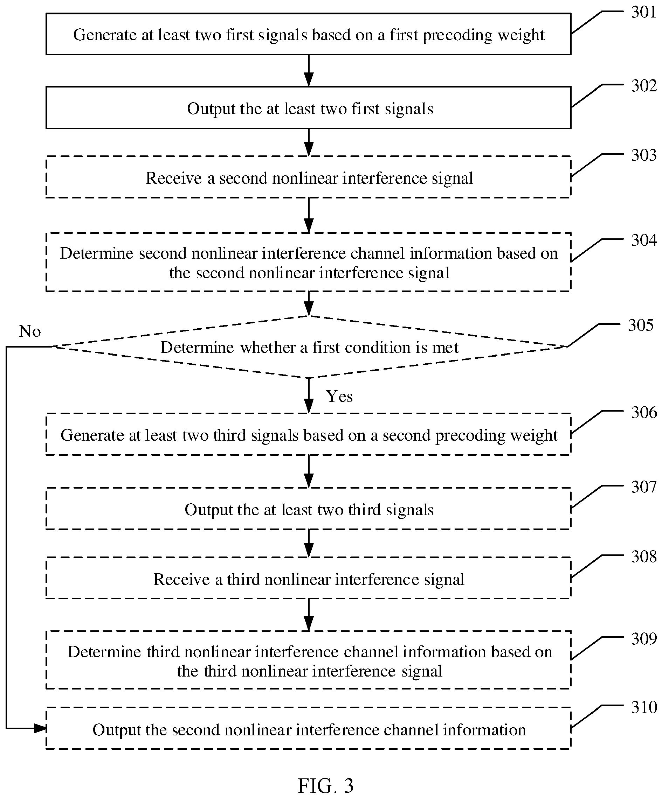

In a possible implementation, the communication device obtains the nonlinear interference channel information in the plurality of signal transmission directions in one communication processing process. For a specific implementation procedure, refer to related descriptions in the embodiment shown in FIG. 3 below.

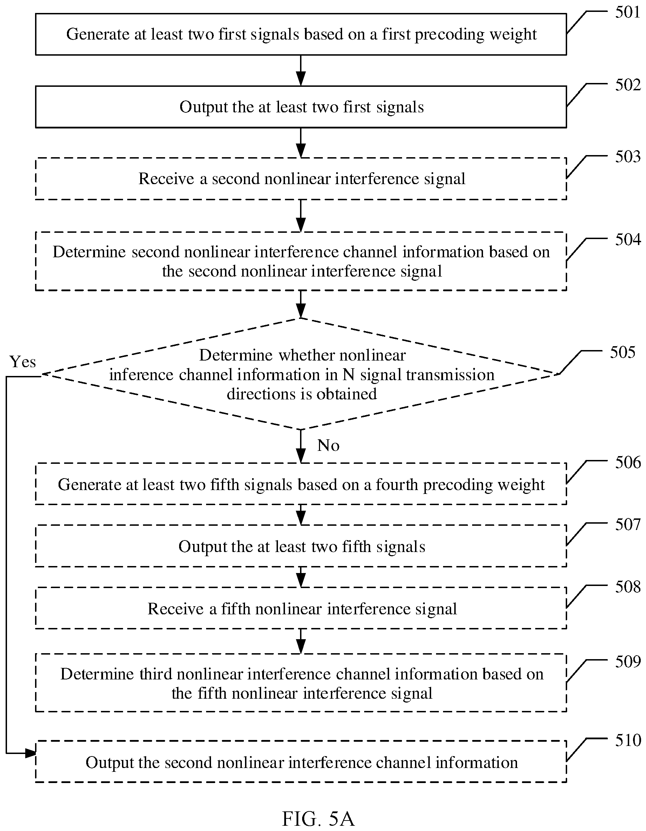

In another possible implementation, the communication device obtains nonlinear interference channel information in one signal transmission direction in one communication processing process. For a specific implementation procedure, refer to related descriptions in the embodiment shown in FIG. 5A.

202: Output the at least two first signals.

The at least two first signals are used to excite a second nonlinear interference signal. The second nonlinear interference signal is a nonlinear interference signal obtained through excitation of a second nonlinear interference source by the at least two first signals.

For the related description of the second nonlinear interference source, refer to the foregoing related description of the first nonlinear interference source. Details are not described herein again.

For example, as shown in FIG. 1A, the network device 1 outputs the at least two first signals. The network device 1 performs radio frequency processing on the at least two first signals, and sends the at least two first signals. The first precoding weight is precoding weights corresponding to a plurality of signal transmission directions covered by transmit antennas of the network device 1. In this case, the network device 1 transmits the at least two first signals in the plurality of signal transmission directions. Alternatively, the first precoding weight is a precoding weight corresponding to a signal transmission direction covered by the transmit antennas of the network device 1. In this case, the network device 1 transmits the at least two first signals in this signal transmission direction.

Optionally, the first nonlinear interference source is partially or completely the same as the second nonlinear interference source.

For example, the first nonlinear interference channel information includes: nonlinear interference channel information of all the signal transmission directions covered by the transmit antennas of the communication device. The first nonlinear interference source includes a nonlinear interference source 1, a nonlinear interference source 2, a nonlinear interference source 3, a nonlinear interference source 4, and a nonlinear interference source 5. The first precoding weight is precoding weights corresponding to the three signal transmission directions covered by the transmit antennas of the communication device. Herein, an example in which the second nonlinear interference source includes the nonlinear interference source 3, the nonlinear interference source 4, and the nonlinear interference source 5 is used for description.

Therefore, it can be learned that both the first nonlinear interference source and the second nonlinear interference source include the nonlinear interference source 3, the nonlinear interference source 4, and the nonlinear interference source 5. Therefore, the communication device may determine the first precoding weight based on the first nonlinear interference channel information. Then, the communication device generates the at least two first signals based on the first precoding weight. The at least two first signals are used to excite the second nonlinear interference signal. In this way, it is convenient for the communication device to accurately obtain channel information of the second nonlinear interference source based on the second nonlinear interference signal.

The following provides an example with reference to a specific form of a nonlinear interference source.

For example, the first nonlinear interference source includes an interface 1, an interface 2, and an interface 3. The second nonlinear interference source includes an interface 3, an interface 4, and an interface 5. Therefore, it can be learned that both the first nonlinear interference source and the second nonlinear interference source include the interface 3. Therefore, the communication device may determine the first precoding weight based on the first nonlinear interference channel information. Then, the communication device generates the at least two first signals based on the first precoding weight. The at least two first signals are used to excite the second nonlinear interference signal. In this way, it is convenient for the communication device to accurately obtain channel information between the interface 3 and receive antennas of the communication device based on the second nonlinear interference signal.

Optionally, the embodiment shown in FIG. 2A further includes step 203 and step 204. Step 203 and step 204 may be performed after step 202.

203: Receive the second nonlinear interference signal.

In a possible implementation, the communication device performs step 201 and step 202. Further, the communication device is used as a receive end of the second nonlinear interference signal, to perform step 203 and step 204.

In this implementation, a frequency of the second nonlinear interference signal falls within a receive frequency range of the receive antennas of the communication device. The communication device receives the second nonlinear interference signal from the second nonlinear interference source. The following uses this implementation as an example for description.

In another possible implementation, the communication device performs step 201 and step 202. Another communication device is used as a receive end of the second nonlinear interference signal, to perform step 203 and step 204.

In this implementation, a frequency of the second nonlinear interference signal falls within a receive frequency range of receive antennas of the another communication device. The another communication device receives the second nonlinear interference signal from the second nonlinear interference source.

204: Determine second nonlinear interference channel information based on the second nonlinear interference signal.

The second nonlinear interference channel information indicates at least one of the following: a second covariance matrix $R_{dl2}$, a third covariance matrix $R_{ul2}$, a second interference space $D_{dl2}$, a third interference space $D_{ul2}$, a second interference channel $H_{dl2}$, and a third interference channel $H_{ul2}$.

The second covariance matrix $R_{dl2}$ is a covariance matrix of channels between transmit antennas and the second nonlinear interference source. The third covariance matrix $R_{ul2}$ is a covariance matrix of channels between the second nonlinear interference source and receive antennas.

The second interference space $D_{dl2}$ is a channel space between the transmit antennas and the second nonlinear interference source. The third interference space $D_{ul2}$ is a channel space between the second nonlinear interference source and the receive antennas.

The second interference channel $H_{dl2}$ is a channel between the transmit antennas and the second nonlinear interference source. The third interference channel $H_{ul2}$ is a channel between the second nonlinear interference source and the receive antennas.

There are a plurality of manners in which the second nonlinear interference channel information indicates the at least one piece of the foregoing information. The following shows several possible implementations. This application is still applicable to other implementations, and the manners shown in the following do not constitute a limitation on this application.

Manner 1: The second nonlinear interference channel information includes at least one piece of the foregoing information.

Manner 2: The second nonlinear interference channel information includes a characteristic parameter of the at least one piece of the foregoing information.

The characteristic parameter is used to determine the at least one piece of the foregoing information.

Manner 3: The second nonlinear interference channel information includes an index, and the index indicates the at least one piece of the foregoing information.

In some implementations, the communication device avoids, based on the second nonlinear interference channel information, the second nonlinear interference source during signal transmission. For example, the communication device adjusts a precoding weight of a to-be-transmitted signal, to avoid nonlinear interference caused by excitation of a nonlinear interference source by a downlink signal.

In some implementations, the communication device does not receive a signal on a frequency on which the second nonlinear interference signal is located.

In some implementations, the communication device determines, based on the second nonlinear interference channel information, frequency bands to which different users belong, and schedules corresponding users by using the frequency bands. In this way, interference impact of the second nonlinear interference signal on a user is minimized.

For example, the communication device is a base station. The communication device divides downlink user frequency bands into two subsets, which are respectively a subset 1 and a subset 2. A downlink user frequency band in the subset 1 represents a downlink frequency band that has relatively large impact on an uplink user frequency band. A downlink user frequency band in the subset 2 represents a downlink frequency band that has relatively small impact on an uplink user frequency band. Based on a correlation between a nonlinear interference channel and a downlink channel from the communication device to a user, the communication device schedules a user with a relatively high correlation by using the downlink user frequency band of the subset 2, and schedules a user with a relatively low correlation by using the downlink user frequency band of the subset 1. In this way, interference to an uplink user caused by a nonlinear interference signal excited by a downlink user signal sent by the communication device is alleviated.

The nonlinear interference channel is a channel between the second nonlinear interference source and the communication device. Herein, the nonlinear interference channel is represented by a vector 1. Herein, the downlink channel between the communication device and the user is represented by a vector 2. The vector 1 and the vector 2 are normalized.

The correlation between the nonlinear interference channel and the downlink channel from the communication device to the user may be represented by an inner product of the vector 1 and the vector 2. A larger inner product of the vector 1 and the vector 2 indicates a higher correlation. A smaller inner product of the vector 1 and the vector 2 indicates a lower correlation. For example, when the inner product of the vector 1 and the vector 2 is greater than or equal to 0.9, it is considered that the correlation between the nonlinear interference channel and the downlink channel is relatively high.

In this embodiment of this application, the at least two first signals are generated based on the first precoding weight, and the at least two first signals are output. The first precoding weight is related to the first nonlinear interference channel information. That is, the first precoding weight is obtained based on the first nonlinear interference channel information. The communication device does not need to determine a downlink transmit beam in a beam scanning manner. In this way, time consumption caused by beam scanning is avoided, and energy consumption overheads caused by beam scanning are avoided. Energy consumption overheads of the communication device are reduced. In addition, the first precoding weight is obtained based on the first nonlinear interference channel information. This helps obtain more accurate nonlinear interference channel information.

The following provides description by using an example in which the second nonlinear interference channel information includes the at least one piece of the foregoing information. Optionally, the second nonlinear interference channel information includes the third covariance matrix $R_{ul2}$, the third interference space $D_{ul2}$, and the third interference channel $H_{ul2}$.

In some implementations, step 204 in the embodiment shown in FIG. 2A specifically includes step 2041 and step 2042. The following describes step 2041 and step 2042 with reference to FIG. 2B.

Step 2041: Determine the third covariance matrix based on the second nonlinear interference signal $Y_2$.

$$R_{ul2} = \frac{1}{L} Y_2 Y_2^H$$

The third covariance matrix meets . $R_{ul2}$ is the third covariance matrix, $Y_2$ is the second nonlinear interference signal, and $Y_2^H$ is conjugate transposition of the second nonlinear interference signal.

L is a quantity of frequency domain sampling points or a quantity of time domain sampling points used by the communication device to receive the second nonlinear interference signal $Y_2$. L is a quantity of frequency domain sampling points corresponding to an uplink bandwidth of the communication device; or L is a quantity of time domain sampling points corresponding to the uplink bandwidth of the communication device.

For example, the uplink bandwidth of the communication device is 5 Mb (megabit), and a subcarrier spacing used by the communication device is 15 kHz (kilohertz). In this case, the communication device occupies 300 subcarriers in frequency domain. The 300 subcarriers correspond to 300 frequency domain sampling points. Therefore, L is 300. If the communication device includes 10 transmit antennas, the second nonlinear interference signal $Y_2$ is a 10*300-dimensional matrix.

For example, the uplink bandwidth of the communication device is 5 Mb (megabit), and the subcarrier spacing used by the communication device is 15 kHz (kilohertz). The communication device occupies 300 subcarriers in frequency domain. The communication device performs Fourier transform on frequency domain signals carried on the 300 subcarriers, to obtain corresponding time domain signals. The time domain signal includes 512 time domain sampling points. Therefore, Lis 512. If the communication device includes 10 transmit antennas, the second nonlinear interference signal $Y_2$ is a 10*512-dimensional matrix.

Step 2042: Determine the third interference space $D_{ul2}$ and the third interference channel $H_{ul2}$ based on the third covariance matrix $R_{ul2}$.

The following describes step 2042 with reference to step 2042a to step 2042c.

Step 2042a: Perform singular value decomposition on the third covariance matrix $R_{ul2}$, to obtain a second left singular matrix $U_2$ of the third covariance matrix $R_{ul2}$.

The third covariance matrix meets $R_{ul2} = U_2 \Sigma_2 V_2^H$.

$R_{ul2}$ is the third covariance matrix, $U_2$ is an M*M-dimensional matrix, and M is a quantity of receive antennas.

$\Sigma_2$ is an M*M-dimensional diagonal matrix, a main diagonal element corresponding to an $r^{th}$ column vector of $\Sigma_2$ is a singular value corresponding to an $r^{th}$ column vector of $U_2$, and r is an integer greater than or equal to 1 and less than or equal to M. Main diagonal elements of $\Sigma_2$ are all greater than 0, and elements in $\Sigma_2$ other than the main diagonal elements are all 0.

$V_2$ is a right singular matrix of the third covariance matrix $R_{ul2}$, and $V_2^H$ is transposition of $V_2$.

Step 2042b: Select corresponding P column vectors from the second left singular matrix $U_2$ in descending order of singular values in $\Sigma_2$, to obtain the third interference space $D_{ul2}$.

Singular values in $\Sigma_2$ that correspond to the P column vectors are separately greater than or equal to a third preset threshold. P is an integer greater than or equal to 1.

For example, the third interference space $D_{ul2} = [d_1, d_2, ... d_P]$, $d_b$ is a $b^{th}$ column vector in $U_2$, and b is an integer greater than or equal to 1 and less than or equal to P.

It should be noted that optionally, a value of the third preset threshold may be set based on a thermal noise power of the communication device. For example, the value of the third preset threshold is an average power of thermal noise of the communication device.

Step 2042c: Separately multiply the P column vectors by singular values respectively corresponding to the P column vectors in $\Sigma_2$, to obtain the third interference channel $H_{ul2}$.

For example, the third interference channel $H_{ul2}=[h_{ul,1}, , h_{ul,2}, ... h_{ul,P}]$, and $h_{ul,b}$ is equal to the bth column vector $d_b$ in $U_2$ multiplied by an element in a bth row and a bth column of $\Sigma_2$.

Optionally, the second nonlinear interference channel information further includes the second covariance matrix $R_{dl2}$. The embodiment shown in FIG. 2B further includes step 2043.

Step 2043: Determine the second covariance matrix $R_{dl2}$ based on the third covariance matrix $R_{ul2}$.

The following describes several possible implementations in which the communication device determines the second covariance matrix $R_{dl2}$ based on the third covariance matrix $R_{ul2}$. Implementations shown below are merely examples, and do not constitute a limitation on this application. This application is still applicable to other implementations.

The following describes Implementation 1 with reference to step 2043a.

Step 2043a: Use the third covariance matrix $R_{ul2}$ as the second covariance matrix $R_{dl2}$.

In some implementations, Implementation 1 is applicable to a scenario in which a quantity of transmit antennas is consistent with a quantity of receive antennas of the communication device, and positions of the transmit antennas are consistent with positions of the receive antennas.

The following describes Implementation 2 with reference to step 2043b and step 2043c.

Step 2043b: Determine a receive antenna closest to each transmit antenna.

Step 2043c: Use an element $r_{xy}$ as an element $r_{ef}$ in the second covariance matrix $R_{dl2}$, to obtain the second covariance matrix $R_{dl2}$.

The element $r_{xy}$ is related information that is of a signal received by an xth receive antenna and a signal received by a yth receive antenna of the communication device and that is in the third covariance matrix $R_{ul2}$. The element $r_{ef}$ is related information that is of signals respectively transmitted by an eth transmit antenna and an fth transmit antenna of the communication device and that is in the second covariance matrix $R_{dl2}$.

The eth receive antenna is closest to the xth transmit antenna, and the f[h] receive antenna is closest to the yth transmit antenna, e and f are both integers greater than or equal to 1 and less than or equal to M, and M is the quantity of receive antennas. x and y are both integers greater than or equal to 1 and less than or equal to N, and N is the quantity of transmit antennas.

In some implementations, Implementation 2 is applicable to a scenario in which the quantity of transmit antennas is not equal to the quantity of receive antennas. Alternatively, Implementation 2 is applicable to a scenario in which the positions of transmit antennas are inconsistent with positions of receive antennas.

The following describes Implementation 3 with reference to step 2043d to step 2043f.

Step 2043d: Perform matrix vectorization processing on the third covariance matrix $R_{ul2}$ to obtain $r_{vec,ul}$.

$r_{vec,ul}$ is an $M^2 * 1$-dimensional matrix, $M^2$ is a square of M, and M is the quantity of receive antennas.

Specifically, the communication device transforms the third covariance matrix into a column vector to obtain $r_{vec,ul}$. $r_{vec,ul}$ includes all elements in the third covariance matrix $R_{ul2}$. The third covariance matrix $R_{ul2}$ is an M*M-dimensional matrix.

$$R_{ul2} = \begin{bmatrix} r'_{11} & r'_{12} & r'_{13} \\ r'_{21} & r'_{22} & r'_{23} \\ r'_{31} & r'_{32} & r'_{33} \end{bmatrix}$$

For example, , and the communication device arranges elements in $R_{ul2}$ into

$$vec(R_{\text{ul2}}) = \begin{bmatrix} r'_{11} \\ r'_{21} \\ r'_{31} \\ r'_{12} \\ r'_{22} \\ r'_{32} \\ r'_{13} \\ r'_{23} \\ r'_{33} \end{bmatrix}.$$

one column vector in a column vector sequence of $R_{\text{ul2}}$, to obtain $r_{vec,ul}$ =

Step 2043e: Determine $r_{vec,dl}$ based on a first transformation matrix A and $r_{vec,ul}$.

$r_{vec,dl}$ may be understood as a matrix obtained through matrix vectorization processing on the second covariance matrix $R_{\text{dl2}}$. $r_{vec,dl}$ = A*$r_{vec,ul}$.

A is the first transformation matrix, and the first transformation matrix is a relationship that is between $r_{vec,ul}$ and $r_{vec,dl}$ and that is determined based on first simulation data.

The first simulation data includes a plurality of groups of historical third covariance matrices $R_{\text{ul2}}$ and historical second covariance matrices $R_{\text{dl2}}$ that are obtained through traversal of a plurality of nonlinear interference scenarios and simulation.

Optionally, different nonlinear interference scenarios respectively correspond to different nonlinear interference parameters. For example, a nonlinear interference parameter includes at least one of the following: a position of a nonlinear interference source, a quantity of nonlinear interference sources, and an interference power of the nonlinear interference source.

For example, the plurality of nonlinear interference scenarios are traversed to obtain the first simulation data. The first simulation data includes $R_{dl}^{(i)}$ and $R_{ul}^{(i)}$. A value of i is an integer between [1, S5], S5 is a quantity of statistical samples, and S5 is an integer greater than 1. In this case, $r_{vec,dl}^{(i)} = vec(R_{dl}^{(i)})$, and $r_{vec,ul}^{(i)} = vec(R_{ul}^{(i)})$. $r_{vec,dl}^{(i)}$ is obtained through matrix vectorization processing on $R_{dl}^{(i)}$. $r_{vec,ul}^{(i)}$ is obtained through matrix vectorization processing on $R_{ul}^{(i)}$. In this case, $A = [r_{vec,dl}^{(1)}, ... r_{vec,dl}^{(T)}][r_{vec,ul}^{(1)}, ... r_{vec,ul}^{(T)}]^{+}$ and $[r_{vec,ul}^{(1)}, ... r_{vec,ul}^{(T)}]^{+}$ represents a pseudoinverse operation on a matrix $[r_{vec,dl}^{(1)}, ... r_{vec,dl}^{(T)}]$. Therefore, $r_{vec,dl} = A * r_{vec,ul} = [r_{vec,dl}^{(1)}, ... r_{vec,dl}^{(T)}] \; [r_{vec,ul}^{(1)}, ... r_{vec,ul}^{(T)}]^{+} * r_{vec,ul}$.

Step 2043f: Determine the second covariance matrix $R_{\text{dl2}}$ based on $r_{vec,dl}$.

$$r_{vec,dl} = vec = (R_{dl2}) = \begin{bmatrix} r_{11} \\ r_{21} \\ r_{31} \\ r_{12} \\ r_{22} \\ r_{32} \\ r_{13} \\ r_{23} \\ r_{33} \end{bmatrix},$$

For example, if , the communication device may determine that

$$R_{dl2} = \begin{bmatrix} r_{11} & r_{12} & r_{13} \\ r_{21} & r_{22} & r_{23} \\ r_{31} & r_{32} & r_{33} \end{bmatrix}.$$

In some implementations, a scenario to which the foregoing Implementation 3 is applicable is not limited. For example, the foregoing Implementation 3 is applicable to a scenario in which the quantity of transmit antennas is equal to or not equal to the quantity of receive antennas. Alternatively, the foregoing implementation 3 is applicable to a scenario in which the positions of transmit antennas are the same as or different from the positions of receive antennas.

There is no fixed execution sequence between step 2043 and step 2042. Step 2042 may be first performed, and then step 2043 is performed; or step 2043 is first performed, and then step 2042 is performed; or step 2042 and step 2043 are simultaneously performed based on a situation. This is not specifically limited in this application.

Optionally, the second nonlinear interference channel information includes the second interference space $D_{dl2}$. The embodiment shown in FIG. 2B further includes step 2044.

Step 2044: Determine the second interference space $D_{dl2}$.

Specifically, the communication device determines the second interference space $D_{dl2}$ in a plurality of manners. The following describes two possible implementations. This application is still applicable to other implementations. This is not specifically limited in this application.

Implementation 1: The communication device determines the second interference space $D_{dl2}$ based on the second covariance matrix $R_{dl2}$.

The following describes Implementation 1 with reference to step 2044a and step 2044b.

Step 2044a: Perform singular value decomposition on the second covariance matrix $R_{dl2}$, to obtain a third left singular matrix $U_3$ of the second covariance matrix $R_{dl2}$.

The second covariance matrix $R_{dl2}$ meets $R_{dl2} = U_3 \Sigma_3 V_3^H$.

$U_3$ is an N*N-dimensional matrix, and $U_3$ is the left singular matrix of the second covariance matrix $R_{dl2}$.

$\Sigma_3$ is an N*N-dimensional diagonal matrix, a main diagonal element corresponding to a kth column vector of $\Sigma_3$ is a singular value corresponding to a kth column vector of $U_3$, and k is an integer greater than or equal to 1 and less than or equal to N. Main diagonal elements of $\Sigma_3$ are all greater than 0, and elements in $\Sigma_3$ other than the main diagonal elements are all 0.

$V_2$ is an N*N-dimensional matrix, $V_2$ is a right singular matrix of the second covariance matrix, and $V_2^H$ is conjugate transposition of $V_2$.

Step 2044b: Select corresponding G column vectors from the third left singular matrix $U_3$ in descending order of singular values in $\Sigma_3$, to obtain the second interference space $D_{dl2}$.

Singular values in $\Sigma_3$ that correspond to the G column vectors are separately greater than or equal to a fourth preset threshold.

For example, $D_{dl2} = [d_1, d_2, ..., d_G]$, $d_q = u_q$, $u_q$ is a qth column vector in $U_2$, and q is an integer greater than or equal to 1 and less than or equal to G. G is an integer greater than or equal to 1.

It should be noted that, optionally, a value of the fourth preset threshold is set based on a power of thermal noise.

Implementation 2: The communication device determines the second interference space $D_{dl2}$ based on the third interference space $D_{ul2}$.

Specifically, the communication device multiplies the third interference space $D_{ul2}$ by a second transformation matrix B, to obtain the second interference space $D_{dl2}$.

The second transformation matrix B is a relationship that is between the third interference space $D_{ul2}$ and the second interference space $D_{dl2}$ and that is determined based on second simulation data.

The second simulation data includes a plurality of groups of historical third interference spaces $D_{ul2}$ and historical second interference spaces $D_{dl2}$ that are obtained through traversal of a plurality of nonlinear interference scenarios and simulation. For related descriptions of the nonlinear interference scenario, refer to the foregoing related descriptions. Details are not described herein again.

For example, the plurality of nonlinear interference scenarios are traversed to obtain the second simulation data. The second simulation data includes $D_{dl}^{(i)}$ and $D_{ul}^{(i)}$. A value of i is an integer between [1, S5], S5 is a quantity of statistical samples, and S5 is an integer greater than 1. In this case, $d_{vec,dl}^{(i)} = vec(D_{dl}^{(i)})$, and $d_{vec,ul}^{(i)} = vec(D_{ul}^{(i)})$

$d_{vec,dl}^{(i)}$ is obtained through matrix vectorization processing on $D_{dl}^{(i)}$ . is obtained through matrix vectorization processing on $D_{ul}^{(i)}$ . In this case, $B=[d_{vec,dl}^{(1)},...d_{vec,dl}^{(T)}]\,[d_{vec,ul}^{(1)},...d_{vec,ul}^{(T)}]^{+}$ , and $[d_{vec,ul}^{(1)},...d_{vec,ul}^{(T)}]^{+}$ represents a pseudoinverse operation on a matrix $[d_{vec,dl}^{(1)},...d_{vec,dl}^{(T)}]$ . Therefore, $D_{dl2}=B*\,D_{ul2}=[d_{vec,dl}^{(1)},...d_{vec,dl}^{(T)}]\,[d_{vec,ul}^{(1)},...d_{vec,ul}^{(T)}]^{+}*D_{ul2}$ .

Optionally, the second nonlinear interference channel information includes the second interference channel $H_{dl2}$ . The embodiment shown in FIG. 2B further includes step 2045.

Step 2045: Determine the second interference channel $H_{dl2}$ .

The communication device determines the second interference channel $H_{dl2}$ in a plurality of manners. The following shows several possible implementations.

Implementation 1: The communication device determines the second interference channel $H_{dl2}$ based on the second covariance matrix $R_{dl2}$ .

The following describes Implementation 1 with reference to step 2045a to step 2045c.

Step 2045a: Perform singular value decomposition on the second covariance matrix $R_{dl2}$, to obtain a third left singular matrix $U_3$ of the second covariance matrix $R_{dl2}$ .

Step 2045a is similar to step 2044a. For details, refer to related descriptions of step 2044a.

Step 2045b: Select corresponding S column vectors from the third left singular matrix $U_3$ in a descending order of singular values in $\Sigma_3$ .

Singular values in $\Sigma_3$ that correspond to the S column vectors are separately greater than or equal to a fifth preset threshold.

It should be noted that, optionally, a value of the fifth preset threshold is set based on a power of thermal noise.

Step 2045c: The communication device separately multiplies the S column vectors by singular values in $\Sigma_3$ that correspond to the S column vectors, to obtain the second interference channel $H_{dl2}$ .

For example, $H_{dl2}=[h_{ul,1},h_{ul,2},...,h_{ul,S}]$, $h_{ul,j}=u_j^*\Sigma(j,j)$, $u_j$ is a j$^{th}$ column vector of $U_2$, and $\Sigma(j,j)$ is a main diagonal element in a j$^{th}$ row and a j$^{th}$ column in $\Sigma_2$ . j is an integer greater than or equal to 1 and less than or equal to S. S is an integer greater than or equal to 1.

Implementation 2: The communication device determines the second interference channel $H_{dl2}$ based on the third interference channel $H_{ul2}$ .

Specifically, the communication device multiplies the third interference channel $H_{ul2}$ by a third transformation matrix C, to obtain the second interference channel $H_{dl2}$ .

The third transformation matrix C is a relationship that is between the third interference channel $H_{ul2}$ and the second interference channel $H_{dl2}$ and that is determined based on third simulation data.

The third simulation data includes a plurality of groups of historical third interference channels $H_{ul2}$ and historical second interference channels $H_{dl2}$ that are obtained through traversal of a plurality of nonlinear interference scenarios and simulation. For related descriptions of the nonlinear interference scenario, refer to the foregoing related descriptions. Details are not described herein again.

For example, the plurality of nonlinear interference scenarios are traversed to obtain the third simulation data. The third simulation data includes $H_{dl}^{(i)}$ and $H_{ul}^{(i)}$ . A value of i is an integer between [1, S1], and S1 is a quantity of statistical samples. In this case, $h_{vec,dl}^{(i)}=vec(H_{dl}^{(i)})$ , and $h_{vec,ul}^{(i)}=vec(H_{ul}^{(i)})$ . $h_{vec,dl}^{(i)}$ is obtained through matrix vectorization processing on $H_{dl}^{(i)}$ . $h_{vec,ul}^{(i)}$ is obtained through matrix vectorization processing on $H_{ul}^{(i)}$ . In this case, $C=[h_{vec,dl}^{(1)},...h_{vec,dl}^{(T)}]\,[h_{vec,ul}^{(1)},...h_{vec,ul}^{(T)}]^{+}$ , and $[h_{vec,ul}^{(1)},...h_{vec,ul}^{(T)}]^{+}$ represents a pseudo-inverse operation on a matrix $[h_{vec,dl}^{(1)},...h_{vec,dl}^{(T)}]$ . In this case, $H_{dl2}=C*H_{ul2}=[h_{vec,dl}^{(1)},...h_{vec,dl}^{(T)}]\,[h_{vec,ul}^{(1)},...h_{vec,ul}^{(T)}]^{+}*H_{ul2}$ .

There is no fixed execution sequence between step 2044 and step 2045. Step 2044 may be performed before step 2045, or step 2045 may be performed before step 2044, or step 2044 and step 2045 are performed simultaneously based on a situation. This is not specifically limited in this application.

FIG. 3 is a schematic diagram of another embodiment of a communication processing method according to an embodiment of this application. In FIG. 3, the communication processing method includes the following steps.

301: Generate at least two first signals based on a first precoding weight.

The first precoding weight is related to first nonlinear interference channel information. The first nonlinear interference channel information is determined based on a first nonlinear interference signal. The first nonlinear interference signal is a nonlinear interference signal obtained through excitation of a first nonlinear interference source by at least two second signals.

For example, the at least two first signals include a signal X1 and a signal X2. The signal X1 meets X1= $P_{dl1}$ * $S_1$ . The signal X2 meets X2= $P_{dl1}$ * $S_2$ .

$P_{dl1}$ is the first precoding weight. A signal $S_1$ and a signal $S_2$ are signals on which precoding processing is not performed. The signal $S_1$ and the signal $S_2$ may each be a Z*F-dimensional matrix.

Z is a quantity of signal transmission directions corresponding to the first precoding weight, and Z is an integer greater than 1 and less than or equal to N.

F is a quantity of frequency domain sampling points corresponding to a downlink bandwidth of a communication device; or F is a quantity of time domain sampling points corresponding to the downlink bandwidth of the communication device.

For related description examples of the downlink bandwidth and the quantity of frequency domain sampling points and the downlink bandwidth and the quantity of time domain sampling points, refer to related descriptions of step 2041. Details are not described herein again.

In some implementations, if the signal $S_1$ and the signal $S_2$ are both frequency domain signals, F may be a quantity of frequency domain sampling points (which may also be referred to as a quantity of subcarriers) separately occupied by the signal $S_1$ and the signal $S_2$ . If the signal $S_1$ and the signal $S_2$ are both time domain signals, F may be a quantity of time domain sampling points separately occupied by the signal $S_1$ and the signal $S_2$ .

The first precoding weight in step 301 includes precoding weights corresponding to a plurality of signal transmission directions.

The following describes a plurality of possible implementations in which the first precoding weight is related to the first nonlinear interference channel information.

Implementation 1: The first nonlinear interference channel information indicates a first covariance matrix $R_{dl1}$ , and the first precoding weight $P_{dl1}$ is obtained based on the first covariance matrix $R_{dl1}$ .

The first covariance matrix $R_{dl1}$ is a covariance matrix of channels between transmit antennas and the first nonlinear interference source. The first covariance matrix is an N*N-dimensional matrix, where N is a quantity of transmit antennas, and N is an integer greater than or equal to 2.

It should be noted that the first precoding weight may be determined by the communication device based on the first covariance matrix $R_{dl1}$ , or the first precoding weight is determined by the another communication device based on the first covariance matrix $R_{dl1}$ . This is not specifically limited in this application. The following provides description by using an implementation in which the communication device determines the first precoding weight based on the first covariance matrix $R_{dl1}$ as an example. The following provides description with reference to step a to step c.

Step a: Perform singular value decomposition on the first covariance matrix $R_{dl1}$ , to obtain a first left singular matrix $U_1$ of the first covariance matrix $R_{dl1}$ .

The first covariance matrix meets $R_{dl1} = U_1 \Sigma_1 V_1^H$ .

$R_{dl1}$ is the first covariance matrix, the first left singular matrix $U_1$ is an N*N-dimensional matrix, and N is a quantity of transmit antennas of the communication device.

$V_1$ is an N*N-dimensional matrix, and $V_1$ is a right singular matrix of the first covariance matrix $R_{dl1}$ . $V_1^H$ is conjugate transposition of $V_1$ .

$\Sigma_1$ is an N*N-dimensional diagonal matrix. A main diagonal element corresponding to a kth column vector of $\Sigma_1$ is a singular value corresponding to a kth column vector of the first left singular matrix $U_1$. k is an integer greater than or equal to 1 and less than or equal to N. Main diagonal elements of $\Sigma_1$ are all greater than 0, and elements in $\Sigma_1$ other than the main diagonal elements are all 0.

Step b: Select first Z column vectors from the first left singular matrix $U_1$ , where Z is an integer greater than or equal to 1 and less than N.

The first Z column vectors are [$u_{dl,1}$, $u_{dl,2}$, ... $u_{dl,Z}$]. $u_{dl,a}$ is an ath column vector in $U_1$ , and a is an integer greater than or equal to 1 and less than or equal to Z.

Step c: Perform conjugation processing on the first Z column vectors, to obtain the first precoding weight $P_{dl1}$ .

The first precoding weight $P_{dl1} = [u_{dl,1}^*, \ u_{dl,2}^*, \ ... u_{dl,Z}^*]$ . A vector $u_{dl,a}^*$ represents that an element in a vector $u_{dl,a}$ is conjugated.

The first left singular matrix $U_1$ includes nonlinear interference channel information in the plurality of signal transmission directions. The communication device may determine the first precoding weight with reference to nonlinear interference channel information included in the first Z column vectors. In this way, the communication device accurately obtains channel information of nonlinear interference sources in signal transmission directions corresponding to the first Z column vectors. The nonlinear interference channel information does not need to be determined in a beam scanning manner. Energy consumption overheads caused by beam scanning are reduced, and accuracy of the nonlinear interference channel information obtained by the communication device is improved.

Implementation 2: The first nonlinear interference channel information indicates a first interference space $D_{dl1}$. The first precoding weight $P_{dl1}$ is obtained based on the first interference space $D_{dl1}$.

The first interference space $D_{dl1}$ is a channel space between transmit antennas and the first nonlinear interference source.

It should be noted that the first precoding weight may be determined by the communication device based on the first interference space $D_{dl1}$, or the first precoding weight is determined by another communication device based on the first interference space $D_{dl1}$. This is not specifically limited in this application. The following provides description by using an implementation in which the communication device determines the first precoding weight based on the first interference space $D_{dl1}$ as an example. The following provides description with reference to step d and step e.

Step d: Select first Z column vectors from the first interference space $D_{dl1}$.

Z is an integer greater than or equal to 1 and less than or equal to a quantity of columns of the first interference space $D_{dl1}$.

For example, the first Z column vectors are $[d_{dl,1}, d_{dl,2}, ... d_{dl,Z}]$, and $d_{dl,a}$ is an $a^{th}$ column vector of the first interference space $D_{dl1}$. a is an integer greater than or equal to 1 and less than or equal to Z.

Step e: Perform conjugation processing on the first Z column vectors, to obtain the first precoding weight $P_{dl1}$.

For example, the first precoding weight $P_{dl1} = [\, d_{dl,1}^{*}, \quad d_{dl,2}^{*}, \quad ... \; d_{dl,Z}^{*}\, ]$. $d_{dl,a}^{*}$ is an $a^{th}$ column vector in the first interference space $D_{dl1}$. a is an integer greater than or equal to 1 and less than or equal to Z. A vector $d_{dl,a}^{*}$ represents that an element in a vector $d_{dl,a}$ is conjugated.

Each column vector in the first interference space corresponds to one signal transmission direction. Each column vector in the first interference space includes nonlinear interference channel information in a corresponding signal transmission direction. The communication device may determine the first precoding weight based on nonlinear interference channel information included in the first Z column vectors. In this way, the communication device accurately obtains channel information of nonlinear interference sources in signal transmission directions corresponding to the first Z column vectors. The nonlinear interference channel information does not need to be determined in a beam scanning manner. Energy consumption overheads caused by beam scanning are reduced, and accuracy of the nonlinear interference channel information obtained by the communication device is improved.

Implementation 3: The first nonlinear interference channel information indicates a first interference channel $H_{dl1}$. The first interference channel $H_{dl1}$ is a channel between transmit antennas and the first nonlinear interference source. The first precoding weight $P_{dl1}$ is obtained based on the first interference channel $H_{dl1}$.

It should be noted that the first precoding weight $P_{dl1}$ may be determined by the communication device based on the first interference channel $H_{dl1}$, or the first precoding weight $P_{dl1}$ is determined by another communication device based on the first interference channel $H_{dl1}$. This is not specifically limited in this application. The following provides description by using an implementation in which the communication device determines the first precoding weight $P_{dl1}$ based on the first interference channel $H_{dl1}$ as an example. The following provides description with reference to step f to step h.

Step f: Select first Z column vectors from the first interference channel $H_{dl1}$.

Z is an integer greater than or equal to 1 and less than or equal to a quantity of columns of the first interference channel $H_{dl1}$.

For example, the first Z column vectors are $[h_{dl,1}, h_{dl,2}, ... h_{dl,Z}]$. $h_{dl,a}$ is an $a^{th}$ column vector in the first interference channel $H_{dl1}$.

Step g: Perform normalization processing on the first Z column vectors separately, to obtain first Z column vectors on which normalization processing is performed.

Step h: Separately perform conjugation processing on the first Z column vectors on which normalization processing is performed, to obtain the first precoding weight $P_{dl1}$.

Each column vector in the first interference channel $H_{dl1}$ corresponds to one signal transmission direction. Each column vector in the first interference channel $H_{dl1}$ includes nonlinear interference channel information in a corresponding signal transmission direction. The communication device determines the first precoding weight based on nonlinear interference channel information included in the first Z column vectors. In this way, the communication device accurately obtains channel information of nonlinear interference sources in signal transmission directions corresponding to the first Z column vectors. The nonlinear interference channel information does not need to be determined in a beam scanning manner. Energy consumption overheads caused by beam scanning are reduced, and accuracy of the nonlinear interference channel information obtained by the communication device is improved.

302: Output the at least two first signals.

Step 302 is similar to step 202 in the embodiment shown in FIG. 2A. For details, refer to related descriptions of step 202 in the embodiment shown in FIG. 2A. Details are not described herein again.

Optionally, the embodiment shown in FIG. 3 further includes step 303 and step 304. Step 303 and step 304 may be performed after step 302.

303: Receive a second nonlinear interference signal.

304: Determine second nonlinear interference channel information based on the second nonlinear interference signal.

Step 303 and step 304 are similar to step 203 and step 204 in the embodiment shown in FIG. 2A. For details, refer to related descriptions of step 203 and step 204 in the embodiment shown in FIG. 2A. Details are not described herein again.

Optionally, the embodiment shown in FIG. 3 further includes step 305 to step 310. Step 305 to step 310 may be performed after step 304.

305: Determine whether a first condition is met, and if the first condition is met, perform step 306; or if the first condition is not met, perform step 310.

In some implementations, the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

The foregoing step 301 to step 304 may be understood as an iteration process in which the communication device obtains the nonlinear interference channel information. The communication device obtains the second nonlinear interference channel information by performing the foregoing iteration process for a plurality of times. The quantity of iteration times corresponding to the second nonlinear interference channel information may be understood as a quantity of times for which the communication device performs the iteration process to obtain the second nonlinear interference channel information.

It should be noted that, optionally, the communication device sets the first preset threshold and the second preset threshold with reference to an empirical value obtained through simulation or a test. For example, the first preset threshold may be 3 or 4. The second preset threshold may be 0.1 dB (decibel).

306: Generate at least two third signals based on a second precoding weight.

The second precoding weight is related to the second nonlinear interference channel information. The second precoding weight is similar to the first precoding weight. For details, refer to related descriptions of the first precoding weight in the foregoing step 301, and details are not described herein again.

For example, the first precoding weight is precoding weights that correspond to three signal transmission directions and that are determined from the first nonlinear interference channel information. The second precoding weight is precoding weights that correspond to the three signal transmission directions and that are determined from the second nonlinear interference channel information.

307: Output the at least two third signals.

The at least two third signals are used to excite a third nonlinear interference signal, and the third nonlinear interference signal is a nonlinear interference signal obtained through excitation of a third nonlinear interference source by the at least two third signals.

Step 302 is similar to step 202 in the embodiment shown in FIG. 2A. For details, refer to related descriptions of step 202 in the embodiment shown in FIG. 2A. Details are not described herein again.

308: Receive the third nonlinear interference signal.

309: Determine third nonlinear interference channel information based on the third nonlinear interference signal.

Step 308 and step 309 are similar to step 203 and step 204 in the embodiment shown in FIG. 2A. For details, refer to related descriptions of step 203 and step 204 in the embodiment shown in FIG. 2A. Details are not described herein again.

It should be noted that, after step 309, the communication device may determine whether the first condition is met. If the first condition is met, the communication device outputs the third nonlinear interference channel information; or if the first condition is not met, the communication device performs an iteration process similar to the foregoing steps 306 to 309 with reference to the third nonlinear interference channel information.

For example, the communication device may obtain, through a plurality of iteration processes, nonlinear interference channel information in three signal transmission directions corresponding to the second precoding weight. Therefore, accuracy of the nonlinear interference channel information that is in the three signal transmission directions and that is obtained by the communication device is improved.

310: Output the second nonlinear interference channel information.

If the communication device determines that the first condition is met, the communication device may output the second nonlinear interference channel information.

For related descriptions of the second nonlinear interference channel information, refer to the related descriptions of step 204 in the embodiment shown in FIG. 2A. Details are not described herein again.

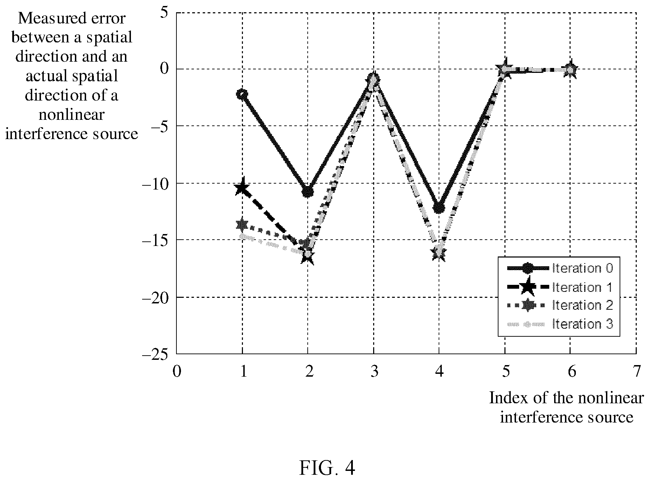

For example, six nonlinear interference sources exist in a signal transmission direction range covered by transmit antennas of the communication device. The communication device obtains channel information of three of the nonlinear interference sources by using the method in the embodiment shown in FIG. 3. As shown in FIG. 4, a horizontal coordinate in FIG. 4 represents an index of a nonlinear interference source. An index of the first nonlinear interference source is 1, an index of the second nonlinear interference source is 2, and so on. An index of the sixth nonlinear interference source is 6. A vertical coordinate in FIG. 4 represents an error between a spatial direction of a nonlinear interference source and an actual spatial direction of the nonlinear interference source. In FIG. 4, Iteration (Iteration) 0 represents an error between spatial directions that are of the six nonlinear interference sources and that are obtained by the communication device through one iteration process and actual spatial directions of the six nonlinear interference sources. Iteration 1 represents an error between spatial directions that are of the six nonlinear interference sources and that are obtained by the communication device through two iteration processes and the actual spatial directions of the six nonlinear interference sources. Iteration 2 represents an error between spatial directions that are of the six nonlinear interference sources and that are obtained by the communication device through three iteration processes and the actual spatial directions of the six nonlinear interference sources.

It can be learned from FIG. 4 that, after the communication device performs three iteration processes, an error between a spatial direction that is of a nonlinear interference source and that is obtained by the communication device and an actual spatial direction of the nonlinear interference source is less than -15 dB.

For example, a spatial direction that is of the first nonlinear interference source and that is obtained by the communication device through three iteration processes is represented as a vector 3, and an actual spatial direction of the first nonlinear interference source is represented as a vector 4. Both the vector 3 and the vector 4 are vectors on which normalization processing is performed. The error between the spatial direction that is of the first nonlinear interference source and that is obtained by the communication device and the actual spatial direction of the first nonlinear interference source is represented as $10*\log_{10}(1-a_1^2)$, where $a_1$ is an inner product of the vector 3 and the vector 4. It can be learned from FIG. 4 that $10*\log_{10}(1-a_1^2)$ is less than -15 dB.

After the communication device performs the embodiment shown in FIG. 3, the communication device may obtain nonlinear interference channel information obtained in a last iteration process. The communication device may perform some corresponding operations based on the nonlinear interference channel information. For details, refer to related descriptions of step 204 in the embodiment shown in FIG. 2A. Details are not described herein again.

In this embodiment of this application, the communication device generates the at least two first signals based on the first precoding weight, and outputs the at least two first signals. The first precoding weight is related to the first nonlinear interference channel information. That is, the first precoding weight is obtained based on the first nonlinear interference channel information. The communication device does not need to determine a downlink transmit beam in a beam scanning manner. In this way, time consumption caused by beam scanning is avoided, and energy consumption overheads caused by beam scanning are avoided. Energy consumption overheads of the communication device are reduced. In addition, the first precoding weight is related to the first nonlinear interference channel information, so that accuracy of the nonlinear interference channel information obtained by the communication device can be improved.

FIG. 5A is a schematic diagram of another embodiment of a communication processing method according to an embodiment of this application. In FIG. 5A, the communication processing method includes the following steps.

501: Generate at least two first signals based on a first precoding weight.

The first precoding weight is obtained based on a first initial precoding weight and a first interference weight. The first initial precoding weight and the first interference weight are obtained based on the first nonlinear channel information.

For related descriptions of the first nonlinear interference source, refer to related descriptions of step 201 in the embodiment shown in FIG. 2A. Details are not described herein again.

The first initial precoding weight is obtained based on the first nonlinear interference channel information. The following describes several possible implementations.

Implementation 1: The first nonlinear interference channel information indicates a first covariance matrix $R_{dl1}$, and the first initial precoding weight is obtained based on the first covariance matrix $R_{dl1}$.

The first covariance matrix $R_{dl1}$ is a covariance matrix of channels between transmit antennas and the first nonlinear interference source.

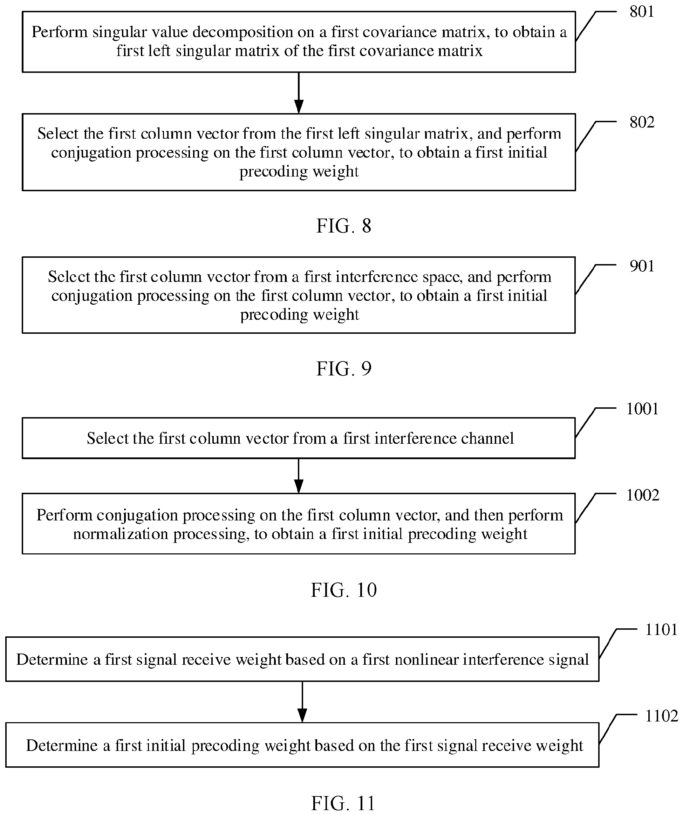

It should be noted that the first initial precoding weight may be determined by the communication device based on the first covariance matrix $R_{dl1}$, or the first initial precoding weight is determined by another communication device based on the first covariance matrix $R_{dl1}$. This is not specifically limited in this application. The following provides description by using an example in which the communication device determines the first initial precoding weight based on the first covariance matrix $R_{dl1}$ . For a specific process, refer to related descriptions in FIG. 8 below.

Implementation 2: The first nonlinear interference channel information indicates a first interference space $D_{dl1}$ , and the first initial precoding weight is obtained based on the first interference space $D_{dl1}$ .

The first interference space $D_{dl1}$ is a channel interference space between the transmit antennas and the first nonlinear interference source.

It should be noted that the first initial precoding weight may be determined by the communication device based on the first interference space $D_{dl1}$ , or the first initial precoding weight is determined by another communication device based on the first interference space $D_{dl1}$ . This is not specifically limited in this application. The following provides description by using an example in which the communication device determines the first initial precoding weight based on the first interference space $D_{dl1}$ . For a specific process, refer to related descriptions of the embodiment shown in FIG. 9 below.

Implementation 3: The first nonlinear interference channel information indicates a first interference channel $H_{dl1}$ , and the first initial precoding weight is obtained based on the first interference channel $H_{dl1}$ .

The first interference channel $H_{dl1}$ is a channel between transmit antennas and the first nonlinear interference source.

It should be noted that the first initial precoding weight may be determined by the communication device based on the first interference channel $H_{dl1}$ , or the first initial precoding weight is determined by another communication device based on the first interference channel $H_{dl1}$ . This is not specifically limited in this application. The following provides description by using an example in which the communication device determines the first initial precoding weight based on the first interference channel $H_{dl1}$ . For a specific process, refer to related descriptions of the embodiment shown in FIG. 10.

Implementation 4: The first initial precoding weight is obtained based on a first nonlinear interference signal.

It should be noted that the first initial precoding weight may be determined by the communication device based on the first nonlinear interference signal, or the first initial precoding weight is determined by another communication device based on the first nonlinear interference signal. This is not specifically limited in this application. The following provides description by using an example in which the communication device determines the first initial precoding weight based on the first nonlinear interference signal. For a specific process, refer to related descriptions of the embodiment shown in FIG. 11.

In some implementations, the first precoding weight is a precoding weight corresponding to the first signal transmission direction. The first nonlinear interference channel information includes nonlinear interference channel information in a plurality of signal transmission directions. The plurality of signal transmission directions include spatial directions in which nonlinear interference sources in all transmission spaces covered by transmit antennas of the communication device are located.

The first signal transmission direction may be usually understood as a spatial direction in which a nonlinear interference source with a relatively high power of a nonlinear interference signal is located.

For example, at least two second signals are a signal X3 and a signal X4 respectively. The signal X3 meets $X3 = W_{dl0} * P_{dl0} * S_3$ . The signal X4 meets $X4 = W_{dl0} * P_{dl0} * S_4$ .

$W_{dl0}$ is an N*N-dimensional identity matrix, $P_{dl0}$ is an N*N-dimensional matrix, and N is a quantity of transmit antennas. A signal $S_3$ and a signal $S_4$ are both N*F-dimensional signals. The signal $S_3$ and the signal $S_4$ are both N*F-dimensional frequency domain signals or time domain signals.

If the signal $S_3$ and the signal $S_4$ are both frequency domain signals, F may be a quantity of frequency domain sampling points (which may also be referred to as a quantity of subcarriers) separately occupied by the signal $S_3$ and the signal $S_4$ . If the signal $S_3$ and the signal $S_4$ are both time domain signals, F may be a quantity of time domain sampling points separately occupied by the signal $S_3$ and the signal $S_4$ .

For example, the communication device transmits the at least two second signals by using all transmit spaces covered by the transmit antennas. If nonlinear interference sources exist in six signal transmission directions in all the transmit spaces covered by the transmit antennas of the communication device, the at least two second signals excite the nonlinear interference sources in the six signal transmission directions to obtain a nonlinear interference signal. The communication device receives the nonlinear interference signal, and determines the first nonlinear interference channel information based on the nonlinear interference signal. The first nonlinear interference channel information includes nonlinear interference channel information in the six signal transmission directions.

In this implementation, the first initial precoding weight $P_{dl1}$ may be obtained based on the first nonlinear interference channel information. For a specific obtaining manner, refer to the following related descriptions. The first interference weight $W_{dl1}$ is an interference weight corresponding to the first signal transmission direction. The first interference weight meets $W_{dl1} = W_{dl0}$ . In this case, the first precoding weight is $P_{dl1} * W_{dl0}$ .

For example, the at least two first signals include a signal X1 and a signal X2. The signal X1 meets $X1 = P_{dl1} * W_{dl1} * S_1$ . The signal X2 meets $X2 = P_{dl1} * W_{dl1} * S_2$ .

A signal $S_1$ and a signal $S_2$ are both signals on which precoding processing is not performed. The signal $S_1$

and the signal $S_2$ are both 1*F-dimensional frequency domain signals or time domain signals. If the signal $S_1$ and the signal $S_2$ are both frequency domain signals, F may be a quantity of frequency domain sampling points separately occupied by the signal $S_1$ and the signal $S_2$. If the signal $S_1$ and the signal $S_2$ are both time domain signals, F may be a quantity of time domain sampling points separately occupied by the signal $S_1$ and the signal $S_2$.

F is a quantity of frequency domain sampling points corresponding to a downlink bandwidth of the communication device; or F is a quantity of time domain sampling points corresponding to the downlink bandwidth of the communication device.

For related description examples of the downlink bandwidth and the quantity of frequency domain sampling points and the downlink bandwidth and the quantity of time domain sampling points, refer to related descriptions of step 2041. Details are not described herein again.

In some implementations, the first precoding weight is a precoding weight corresponding to the second signal transmission direction. The first nonlinear interference channel information includes nonlinear interference channel information in some signal transmission directions.

Nonlinear interference sources exist in k signal transmission directions in all the transmit spaces covered by the transmit antennas of the communication device. Some transmission spaces include signal transmission directions other than the first signal transmission direction. k is an integer greater than or equal to 2 and less than or equal to N.

It should be noted that, optionally, a power of a nonlinear interference signal of a nonlinear interference source in the first signal transmission direction is usually greater than a power of a nonlinear interference signal of a nonlinear interference source in the second signal transmission direction.

For example, the at least two second signals are a signal X3 and a signal X4 respectively. The signal X3 meets $X3 = W_{dl2} * P_{dl0} * S_3$, and the signal X4 meets $X4 = W_{dl2} * P_{dl0} * S_4$.

$P_{dl0}$ is an N*N-dimensional matrix, where N is a quantity of transmit antennas. $W_{dl2} = W_{dl1} - w_{dl1} * w_{dl1}^H$,

where $W_{dl1}$ is the first initial precoding weight $P_{dl1}$, and $w_{dl1}^H$ is conjugate transposition of $w_{dl1}$.

$W_{dl2}$ may be understood as an interference weight corresponding to the second signal transmission direction. $W_{dl1} = W_{dl0}$, where $W_{dl0}$ is an N*N-dimensional identity matrix.

A signal $S_3$ and a signal $S_4$ are both N*F-dimensional signals. The signal $S_3$ and the signal $S_4$ are both N*F-dimensional frequency domain signals or time domain signals.

In some implementations, if the signal $S_3$ and the signal $S_4$ are both frequency domain signals, F may be a quantity of frequency domain sampling points (which may also be referred to as a quantity of subcarriers) separately occupied by the signal $S_3$ and the signal $S_4$.

If the signal $S_3$ and the signal $S_4$ are both time domain signals, F may be a quantity of time domain sampling points separately occupied by the signal $S_3$ and the signal $S_4$.

For example, the communication device transmits the at least two second signals by using some transmit spaces covered by the transmit antennas. If nonlinear interference sources exist in five signal transmission directions in the some transmit spaces covered by the transmit antennas of the communication device, the at least two second signals excite the nonlinear interference sources in the five signal transmission directions to obtain a nonlinear interference signal. The communication device receives the nonlinear interference signal, and determines the first nonlinear interference channel information based on the nonlinear interference signal. The first nonlinear interference channel information includes nonlinear interference channel information in the five signal transmission directions.

In this implementation, the first initial precoding weight $P_{dl2}$ may be obtained based on the first nonlinear interference channel information. For a specific obtaining manner, refer to the following related descriptions. The first interference weight $W_{dl2}$ is an interference weight corresponding to the second signal transmission direction. The first

interference weight $W_{dl2}$ meets $W_{dl2} = W_{dl1} - w_{dl1} * w_{dl1}^H$. In this case, the first precoding weight is $P_{dl2} * W_{dl2}$.

For example, the at least two first signals include a signal X1 and a signal X2. The signal X1 meets $X1 = P_{dl2} * W_{dl2} * S_1$, and the signal X2 meets $X2 = P_{dl2} * W_{dl2} * S_2$.

A signal $S_1$ and a signal $S_2$ are both signals on which precoding processing is not performed. The signal $S_1$ and the signal $S_2$ are both 1*F-dimensional frequency domain signals or time domain signals. In some implementations, if the signal $S_1$ and the signal $S_2$ are both frequency domain signals, F may be a quantity of frequency domain sampling points (which may also be referred to as a quantity of subcarriers) separately occupied by the signal $S_1$ and the signal $S_2$. If the signal $S_1$ and the signal $S_2$ are both time domain signals, F may be a quantity of time domain sampling points separately occupied by the signal $S_1$ and the signal $S_2$.

It can be learned from the foregoing that, when obtaining nonlinear interference channel information corresponding to the second signal transmission direction, the communication device avoids interference of the nonlinear interference signal in the first signal transmission direction. In this way, accuracy of the nonlinear interference channel information that is in the second signal transmission direction and that is obtained by the communication device is improved.

In some implementations, the first precoding weight is a precoding weight corresponding to a gth signal transmission direction. The first nonlinear interference channel information includes nonlinear interference channel information in some signal transmission directions.

Nonlinear interference sources exist in k signal transmission directions in all the transmit spaces covered by the transmit antennas of the communication device. Some transmission spaces include signal transmission directions other than the first g-1 signal transmission directions. k is an integer greater than or equal to 2 and less than or equal to N. g is an integer greater than or equal to 3 and less than or equal to N.

It should be noted that, optionally, powers of nonlinear interference signals of nonlinear interference sources in the first g-1 signal transmission directions are usually greater than a power of a nonlinear interference signal of a nonlinear interference source in the gth signal transmission direction.

For example, the at least two second signals are a signal X3 and a signal X4 respectively. The signal X3 meets $X3 = W_{d1g} * P_{dl0} * S_3$ , and the signal X4 meets $X4 = W_{d1g} * P_{dl0} * S_4$ .

$P_{dl0}$ is an N*N-dimensional matrix, where N is a quantity of transmit antennas.

$W_{d1g}$ is an interference weight corresponding to the gth signal transmission direction.

$$W_{d1g} = W_{d1(g-1)} - w_{dl,(g-1)} * w_{dl,(g-1)}^{H}$$
, $w_{dl,(g-1)}$ is $P_{dl(g-1)}$ , and $w_{dl,(g-1)}^{H}$ is conjugate transposition of $w_{dl,(g-1)}$ .

$W_{d1(g-1)}$ is an interference weight corresponding to a (g-1)th signal transmission direction. $P_{dl(g-1)}$ is an initial precoding weight corresponding to the (g-1)th signal transmission direction.

A signal $S_3$ and a signal $S_4$ are both N*F-dimensional signals. The signal $S_3$ and the signal $S_4$ are both N*F-dimensional frequency domain signals or time domain signals.

If the signal $S_3$ and the signal $S_4$ are both frequency domain signals, F may be a quantity of frequency domain sampling points (which may also be referred to as a quantity of subcarriers) separately occupied by the signal $S_3$ and the signal $S_4$ . If the signal $S_3$ and the signal $S_4$ are both time domain signals, F may be a quantity of time domain sampling points separately occupied by the signal $S_3$ and the signal $S_4$ .

For example, the communication device transmits the at least two second signals by using some transmit spaces covered by the transmit antennas. If nonlinear interference sources exist in N-g+1 signal transmission directions in the some transmit spaces covered by the transmit antennas of the communication device, the at least two second signals excite the nonlinear interference sources in the N-g+1 signal transmission directions to obtain a nonlinear interference signal. The communication device receives the nonlinear interference signal, and determines the first nonlinear interference channel information based on the nonlinear interference signal. The first nonlinear interference channel information includes nonlinear interference channel information in the N-g+1 signal transmission directions.

In this implementation, the first initial precoding weight $P_{d1g}$ may be obtained based on the first nonlinear interference channel information. For a specific obtaining manner, refer to the following related descriptions. The first interference weight $W_{d1g}$ meets $W_{d1g} = W_{d1(g-1)} - w_{dl,(g-1)} * w_{dl,(g-1)}^{H}$ . In this case, the first precoding weight is $P_{d1g} * W_{d1g}$ .

For example, the at least two first signals include a signal X1 and a signal X2. The signal X1 meets $X1 = P_{d1g} * W_{d1g} * S_1$ , and the signal X2 meets $X2 = P_{d1g} * W_{d1g} * S_2$ .

A signal $S_1$ and a signal $S_2$ are both signals on which precoding processing is not performed. The signal $S_1$ and the signal $S_2$ are both 1*F-dimensional frequency domain signals or time domain signals. In some implementations, if the signal $S_1$ and the signal $S_2$ are both frequency domain signals, F may be a quantity of frequency domain sampling points separately occupied by the signal $S_1$ and the signal $S_2$ . If the signal $S_1$ and the signal $S_2$ are both time domain signals, F may be a quantity of time domain sampling points separately occupied by the signal $S_1$ and the signal $S_2$ .

It can be learned from the foregoing that, when obtaining nonlinear interference channel information corresponding to the gth signal transmission direction, the communication device avoids interference of the nonlinear interference signals in the first g-1 signal transmission directions. In this way, accuracy of the nonlinear interference channel information that is in the gth signal transmission direction and that is obtained by the communication device is improved.

In this implementation, optionally, the communication device performs reorthogonalization processing and normalization processing on $w_{dl,(g-1)}$, to obtain $w'_{dl,(g-1)}$. Then, the communication device calculates the first interference weight $W_{d1g}$ based on $w'_{dl,(g-1)}$ .

The first interference weight $$W_{d1g} = W_{d1(g-1)} - w'_{dl,(g-1)} * w'^{H}_{dl,(g-1)}$$ , or the first interference weight

$$W_{dl(g+1)} = I - \sum_{c=1}^{g} w'_{dl,(g-1)} * w'^{H}_{dl,(g-1)}.$$

I is anN*N-dimensional matrix.

$$W_{d1(g-1)} = W_{dl,(g-2)} - w'_{dl,(g-2)} * w'^{H}_{dl,(g-2)}.$$

Specifically, the communication device cyclically performs calculation of the following Formula 1 and Formula 2, to obtain $w'_{dl,(g-1)}$. c is an integer greater than or equal to 1 and less than or equal to g-1.

$$w''_{dl,(g-1)} = W_{dl,(g-1)} - W_{dl,c} * w^{H}_{dl,c} * W_{dl,(g-1)} \qquad \text{Formula 1}$$

$$w'_{dl,(g-1)} = \frac{w''_{dl,(g-1)}}{\left| w''_{dl,(g-1)} \right|} \qquad \text{Formula 2}$$

In the foregoing implementation, the communication device performs reorthogonalization processing and normalization processing on $w_{dl,(g-1)}$. Then, the communication device determines $W_{d1g}$. In this way, when obtaining nonlinear interference channel information in the gth signal transmission direction, the communication device can better avoid interference of the nonlinear interference signals in the first g-1 signal transmission directions. In this way, accuracy of the nonlinear interference channel information that is in the gth signal transmission direction and that is obtained by the communication device is improved.

502: Output the at least two first signals.

503: Receive a second nonlinear interference signal.

504: Determine second nonlinear interference channel information based on the second nonlinear interference signal.

Step 502 to step 504 are similar to step 202 to step 204 in the embodiment shown in FIG. 2A. For details, refer to related descriptions of step 202 to step 204 in the embodiment shown in FIG. 2A. Details are not described herein again.

In this embodiment of this application, the communication device generates the at least two first signals based on the first precoding weight, and outputs the at least two first signals. The first precoding weight is obtained based on the first initial precoding weight and the first interference weight. The first initial precoding weight and the first interference weight are obtained based on the first nonlinear channel information. In this way, the communication device does not need to determine a downlink transmit beam in a beam scanning manner. In this way, time consumption caused by beam scanning is avoided, and energy consumption overheads caused by beam scanning are avoided. Energy consumption overheads of the communication device are reduced. In addition, the first precoding weight is obtained based on the first initial precoding weight and the first interference weight. The first initial precoding weight and the first interference weight are obtained based on the first nonlinear channel information. In this way, accuracy of the nonlinear interference channel information obtained by the communication device can be improved.

Optionally, the embodiment shown in FIG. 5A further includes step 505 to step 510. Step 505 to step 510 may be performed after step 504.

505: Determine whether nonlinear interference channel information in N signal transmission directions is obtained; and if the nonlinear interference channel information in the N signal transmission directions is obtained, perform step 510; or if the nonlinear interference channel information in the N signal transmission directions is not obtained, perform step 506.

For example, a total quantity of signal transmission directions covered by the transmit antennas of the communication device is 6. The communication device determines whether nonlinear interference channel information in the six signal transmission directions is obtained; and if the nonlinear interference channel information in the six signal transmission directions is obtained, the communication device performs step 510; or if the nonlinear interference channel information in the six signal transmission directions is not obtained, the communication device performs step 506.

506: Generate at least two fifth signals based on a fourth precoding weight.

The fourth precoding weight is obtained based on a second initial precoding weight and a second interference weight. The second initial precoding weight and the second interference weight are obtained based on the first nonlinear interference channel information.

For example, in the foregoing step 501, the first precoding weight is the precoding weight corresponding to the first signal transmission direction. In step 506, the fourth precoding weight is a precoding weight corresponding to the second signal transmission direction.

The second initial precoding weight is similar to the first initial precoding weight. For a specific process of determining the second initial precoding weight, refer to related descriptions of the foregoing process of determining the first initial precoding weight. Details are not described herein again.

The second interference weight is similar to the first interference weight. For specific related descriptions of the second interference weight, refer to the foregoing related descriptions of the first interference weight. Details are not described herein again.

507: Output the at least two fifth signals.

508: Receive a fifth nonlinear interference signal.

509: Determine third nonlinear interference channel information based on the fifth nonlinear interference signal.

Step 507 to step 509 are similar to the foregoing step 502 to step 504. For details, refer to related descriptions of the foregoing step 502 to step 504. Details are not described herein again.

510: Output the second nonlinear interference channel information.

If the communication device obtains the nonlinear interference channel information in the N signal transmission directions, the communication device may output the second nonlinear interference channel information. For related descriptions of the second nonlinear interference channel information, refer to the related descriptions of step 204 in the embodiment shown in FIG. 2A. Details are not described herein again.

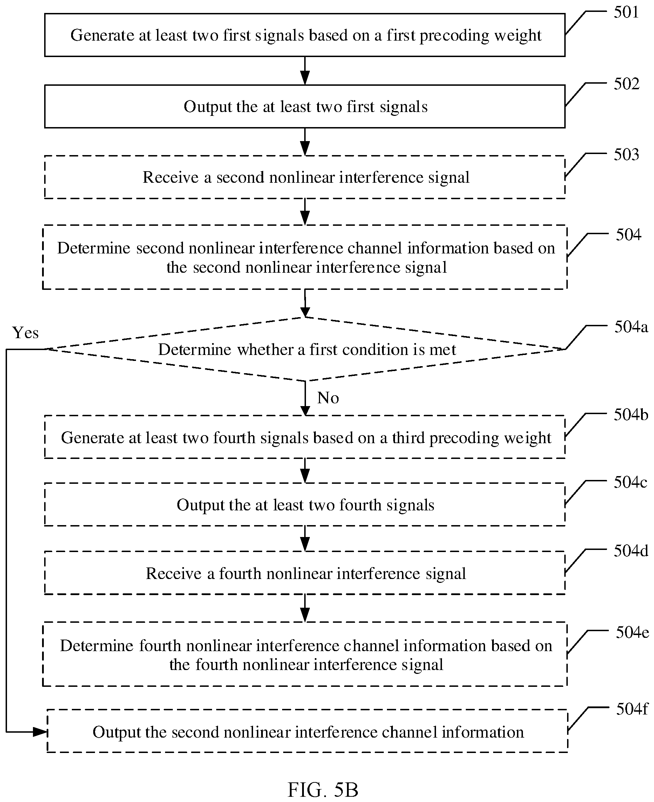

Optionally, the embodiment shown in FIG. 5A further includes step 504a to step 504d. The following provides description with reference to FIG. 5B. Step 504a to step 504f may be performed after step 504. Optionally, step 504a to step 504f are performed before step 505.

504a: Determine whether a first condition is met, and if the first condition is met, perform step 504f; or if the first condition is not met, perform step 504b.

For related descriptions of the first condition, refer to related descriptions of the first condition in step 305 in the embodiment shown in FIG. 3. Details are not described herein again.

504b: Generate at least two fourth signals based on a third precoding weight.

The third precoding weight is obtained based on a third initial precoding weight and the first interference weight. The third initial precoding weight is obtained based on the second nonlinear interference channel information. The first interference weight is obtained based on a first nonlinear interference weight. For example, the third precoding weight is equal to the third initial precoding weight multiplied by the first interference weight.

For example, the first initial precoding weight is an initial precoding weight that corresponds to the first signal transmission direction and that is determined from the first nonlinear interference channel information. The third initial precoding weight is an initial precoding weight that corresponds to the first signal transmission direction and that is determined from the second nonlinear interference channel information. The communication device obtains the nonlinear interference channel information in the first signal transmission direction by using a plurality of iteration processes. In this way, accuracy of the nonlinear interference channel information that is in the first signal transmission direction and that is obtained by the communication device is improved.

The third initial precoding weight is similar to the first initial precoding weight. For a process of determining the third initial precoding weight, refer to related descriptions of the first precoding weight in step 501 in the embodiment shown in FIG. 5A. Details are not described herein again.

504c: Output the at least two fourth signals.

504d: Receive a fourth nonlinear interference signal.

504e: Determine fourth nonlinear interference channel information based on the fourth nonlinear interference signal.

The communication device obtains, by using a plurality of iteration processes, a precoding weight corresponding to one signal transmission direction. Therefore, accuracy of nonlinear interference channel information that is in the signal transmission direction and that is obtained by the communication device is improved.

504f: Output the second nonlinear interference channel information.

Step 504c to step 504f are similar to step 305 to step 310 in the embodiment shown in FIG. 3. For details, refer to specific descriptions of step 305 to step 310 in the embodiment shown in FIG. 3. Details are not described herein again.

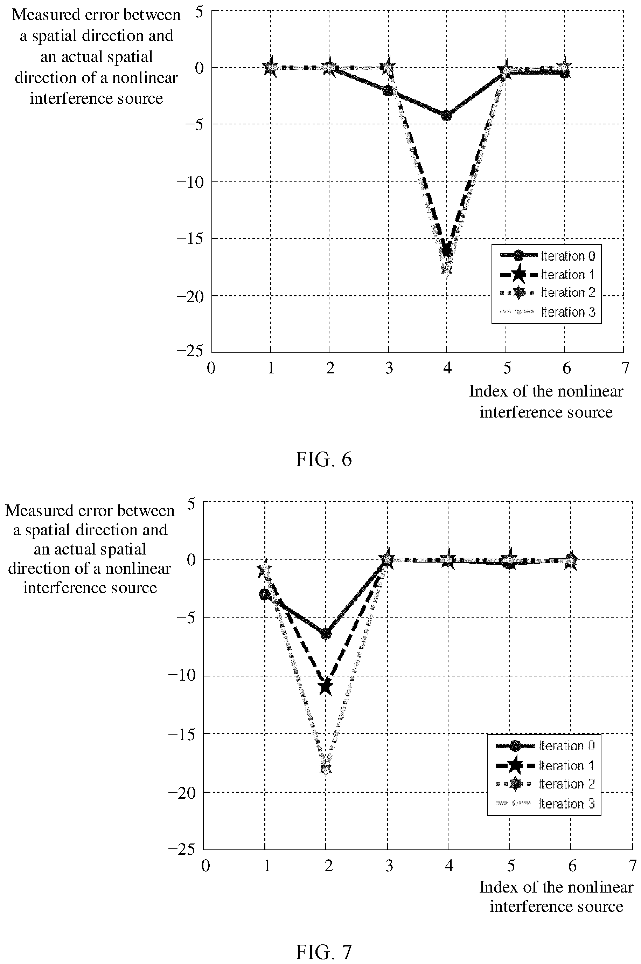

For example, six nonlinear interference sources exist in the signal transmission direction range covered by the transmit antennas of the communication device. The communication device obtains channel information of a nonlinear interference source in the first signal transmission direction by using the communication processing method in the embodiment shown in FIG. 5A and FIG. 5B. Specifically, as shown in FIG. 6, a horizontal coordinate in FIG. 6 represents an index of a nonlinear interference source. An index of the first nonlinear interference source is 1, an index of the second nonlinear interference source is 2, and so on. An index of the sixth nonlinear interference source is 6. A vertical coordinate in FIG. 6 represents an error between a spatial direction of a nonlinear interference source and an actual spatial direction of the nonlinear interference source. In FIG. 6, the communication device obtains channel information of the fourth nonlinear interference source by using three iteration processes. An error between a spatial direction that is of the fourth nonlinear interference source and that is obtained by the communication device and an actual spatial direction of the fourth nonlinear interference source is less than -15 dB.

As shown in FIG. 7, the communication device obtains channel information of a nonlinear interference source in the second signal transmission direction by using the communication processing method in the embodiment shown in FIG. 5A and FIG. 5B. In FIG. 7, the communication device obtains the channel information of the second nonlinear interference source by using three iteration processes. An error between a spatial direction that is of the second nonlinear interference source and that is obtained by the communication device and an actual spatial direction of the second nonlinear interference source is less than -15 dB.

With reference to FIG. 8 to FIG. 11, the following separately describes the four possible implementations in which the communication device determines the first initial precoding weight.

FIG. 8 is a schematic diagram of another embodiment of a communication processing method according to an embodiment of this application. Refer to FIG. 8. The communication processing method includes the following steps.

801: Perform singular value decomposition on the first covariance matrix $R_{dl1}$, to obtain a first left singular matrix $U_1$ of the first covariance matrix $R_{dl1}$.

The first covariance matrix $R_{dl1}$ meets $R_{dl1} = U_1 \Sigma_1 V_1^H$.

$U_1$ is an N*N-dimensional matrix, and N is the quantity of transmit antennas of the communication device.

$V_1$ is an N*N-dimensional matrix, and $V_1$ is a right singular matrix of the first covariance matrix $R_{dl1}$. $V_1^H$ is conjugate transposition of $V_1$.

$\Sigma_1$ is an N*N-dimensional diagonal matrix. A main diagonal element corresponding to a $k^{th}$ column vector of $\Sigma_1$ is a singular value corresponding to a $k^{th}$ column vector of $U_1$. k is an integer greater than or equal to 1 and less than or equal to N. Main diagonal elements of $\Sigma_1$ are all greater than 0, and elements in $\Sigma_1$ other than the main diagonal elements are all 0.

802: Select the first column vector from the first left singular matrix $U_1$, and perform conjugation processing on the first column vector, to obtain the first initial precoding weight.

Specifically, in step 802, the communication device selects the first column vector from $U_1$, and performs conjugation processing on the first column vector, to obtain the first initial precoding weight.

For example, the first initial precoding weight is the initial precoding weight $P_{dl1}$ corresponding to the first signal transmission direction. $P_{dl1} = u_1^*$, where $u_1^*$ represents that an element in a vector $u_1$ is conjugated. $u_1$ is the first column vector in the first left singular matrix $U_1$.

In the embodiment shown in FIG. 8, the first left singular matrix $U_1$ includes nonlinear channel information between transmit antennas and nonlinear interference sources in a plurality of signal transmission directions. The communication device may determine the current to-be-processed first initial precoding weight in the signal transmission direction by using the foregoing step 801 and step 802. In this way, accuracy of nonlinear interference channel information that is in the signal transmission direction and that is subsequently obtained by the communication device can be improved. In addition, this helps accelerate convergence and effectively reduce a quantity of iteration times. The nonlinear interference channel information does not need to be determined in a beam scanning manner. Energy consumption overheads caused by beam scanning are reduced, and accuracy of the nonlinear interference channel information obtained by the communication device is improved.

FIG. 9 is a schematic diagram of another embodiment of a communication processing method according to an embodiment of this application. Refer to FIG. 9. The communication processing method includes the following steps.

901: Select the first column vector from the first interference space $D_{dl1}$, and perform conjugation processing on the first column vector, to obtain the first initial precoding weight.

For example, the first initial precoding weight is the initial precoding weight $P_{dl1}$ corresponding to the first signal transmission direction. $P_{dl1} = d_1^*$, where $d_1^*$ represents that an element in a vector $d_1$ is conjugated. $d_1$ is the first column vector in the first interference space $D_{dl1}$.

In the embodiment shown in FIG. 9, each column vector in the first interference space $D_{dl1}$ corresponds to one signal transmission direction. Each column vector in the first interference space $D_{dl1}$ includes nonlinear interference channel information in a corresponding signal transmission direction. The nonlinear interference channel information is nonlinear channel information between the transmit antennas and a nonlinear interference source in the signal transmission direction. The communication device determines, from the first interference space $D_{dl1}$, the current to-be-processed first initial precoding weight in the signal transmission direction. In this way, accuracy of nonlinear interference channel information that is in the signal transmission direction and that is subsequently obtained by the communication device can be improved. This helps accelerate convergence and effectively reduce a quantity of iteration times. The nonlinear interference channel information does not need to be determined in a beam scanning manner. Energy consumption overheads caused by beam scanning are reduced, and accuracy of the nonlinear interference channel information obtained by the communication device is improved.

FIG. 10 is a schematic diagram of another embodiment of a communication processing method according to an embodiment of this application. Refer to FIG. 10. The communication processing method includes the following steps.

1001: Select the first column vector from the first interference channel $H_{dl1}$.

1002: Perform conjugation processing on the first column vector, and then perform normalization processing, to obtain the first initial precoding weight.

The foregoing step 1001 and step 1002 are described with an example in which the communication device determines the initial precoding weight corresponding to the first signal transmission direction. This is also applicable to a process of determining initial precoding weights corresponding to other signal transmission directions.

In the embodiment shown in FIG. 10, each column vector in the first interference channel $H_{dl1}$ corresponds to one signal transmission direction. Each column vector in the first interference channel includes nonlinear interference channel information in a corresponding signal transmission direction. The nonlinear interference channel information is nonlinear channel information between the transmit antennas and a nonlinear interference source in the signal transmission direction. The communication device may determine the current to-be-processed first initial precoding weight in the signal transmission direction by using the foregoing step 1001 and step 1002. In this way, accuracy of nonlinear interference channel information that is in the signal transmission direction and that is subsequently obtained by the communication device can be improved. This helps accelerate convergence and effectively reduce a quantity of iteration times. The nonlinear interference channel information does not need to be determined in a beam scanning manner. Energy consumption overheads caused by beam scanning are reduced, and accuracy of the nonlinear interference channel information obtained by the communication device is improved.

FIG. 11 is a schematic diagram of another embodiment of a communication processing method according to an embodiment of this application. Refer to FIG. 11. The communication processing method includes the following steps.

1101: Determine a first signal receive weight based on the first nonlinear interference signal.

In step 1101, the communication device determines the first signal receive weight based on the first nonlinear interference signal in a plurality of manners. The following shows several possible implementations. It should be noted that the implementations shown in the following are merely an example, and do not constitute a limitation on this application. This application is still applicable to other implementations.

The following describes Implementation 1 with reference to step 1101a and step 1101b.

Step 1101a: Average column vectors corresponding to time domain sampling points or frequency domain sampling points in the first nonlinear interference signal $Y_1$, to obtain a first intermediate matrix.

$$Z'_{ul1} = \frac{1}{T} \sum_{t=1}^{T} y_t$$

The first intermediate matrix $Z'_{ul1}$ meets .

T is a quantity of time domain sampling points or a quantity of frequency domain sampling points used by the communication device to receive the first nonlinear interference signal. $y_t$ is a column vector corresponding to a $t^{th}$ time domain sampling point or a $t^{th}$ frequency domain sampling point in the first nonlinear interference signal $Y_1$.

For example, an uplink bandwidth of the communication device is 5 Mb (megabit), and a subcarrier spacing used by the communication device is 15 kHz (kilohertz). In this case, the communication device occupies 300 subcarriers in frequency domain. The 300 subcarriers correspond to 300 frequency domain sampling points. Therefore, L is 300. If the communication device includes 10 transmit antennas, the first nonlinear interference signal $Y_1$ is a 10*300-dimensional matrix. In this case, each frequency domain sampling point corresponds to one column vector. The first subcarrier corresponds to the first column vector in the first nonlinear interference signal Y . The second subcarrier corresponds to the second column vector in the first nonlinear interference signal Y . By analogy, the 300$^{th}$ subcarrier corresponds to the 300$^{th}$ column vector in the first nonlinear interference signal $Y_1$.

For example, the uplink bandwidth of the communication device is 5 Mb (megabit), and the subcarrier spacing used by the communication device is 15 kHz (kilohertz). In this case, the communication device occupies 300 subcarriers in frequency domain. The communication device performs Fourier transform on frequency domain signals carried on the 300 subcarriers, to obtain time domain signals, where the time domain signal includes 512 time domain sampling points. Therefore, L is 512. If the communication device includes 10 transmit antennas, the first nonlinear interference signal $Y_1$ is a 10*512-dimensional matrix. In this case, the first time domain sampling point corresponds to the first column vector in the first nonlinear interference signal $Y_1$, and the second time domain sampling point corresponds to the second column vector in the first nonlinear interference signal $Y_1$. By analogy, the 300$^{th}$ time domain sampling point corresponds to the 300$^{th}$ column vector in the first nonlinear interference signal $Y_1$.

Step 1101b: Perform normalization processing on the first intermediate matrix, to obtain the first signal receive weight.

The first signal receive weight $Z_{ul1}$ meets $Z_{ul1} = \dfrac{Z'_{ul1}}{\left|Z'_{ul1}\right|}$ . $Z_{ul1}$ is the first signal receive weight, $Z'_{ul1}$ is the first intermediate matrix, and $\left|Z'_{ul1}\right|$ is a modulo operation of $Z'_{ul1}$ .

The following describes Implementation 2 with reference to step 1101c and step 1101d.

Step 1101c: Determine a column vector corresponding to a $t^{th}$ time domain sampling point or a $t^{th}$ frequency domain sampling point in the first nonlinear interference signal $Y_1$ .

t is an integer greater than or equal to 1 and less than or equal to T, and T is a quantity of time domain sampling points or a quantity of frequency domain sampling points used by the communication device to receive the first nonlinear interference signal.

Step 1101d: Perform normalization processing on the column vector, to obtain a first signal receive weight.

$$Z_{ul1} = \frac{y_t}{\left|y_t\right|}$$

The first signal receive weight $Z_{ul1}$ meets $Z_{ul1} = \dfrac{y_t}{\left|y_t\right|}$ . $Z_{ul1}$ is the first signal receive weight, and $y_t$ is the column vector corresponding to the $t^{th}$ time domain sampling point or the $t^{th}$ frequency domain sampling point in the first nonlinear interference signal $Y_1$. $|y_t|$ is a modulo operation of $y_t$ .

The following describes Implementation 3 with reference to step 1101e to step 1101g.

Step 1101e: Average column vectors corresponding to time domain sampling points or frequency domain sampling points in the first nonlinear interference signal $Y_1$, to obtain a first intermediate matrix.

Step 1101e is similar to step 1101a in the foregoing Implementation 1. For details, refer to related descriptions of step 1101a in the foregoing Implementation 1. Details are not described herein again.

Step 1101f: Obtain a second intermediate matrix through calculation by using a Rayleigh (Rayleigh) quotient, $Z'_{ul1}$ , and a fourth covariance matrix $R_{ul1}$ .

The second intermediate matrix meets $Z''_{ul1} = \left( \left( R_{ul1} - \dfrac{\overline{Y}_1^H * R_{ul1} * \overline{Y}_1}{\overline{Y}_1^H * \overline{Y}_1} * I \right)^{-1} \overline{Y}_1 \right)$ .

$Z''_{ul1}$ is the second intermediate matrix, and $\overline{Y}_1 = \dfrac{1}{T} \sum_{t=1}^{T} y_t$ . For related descriptions of $\dfrac{1}{T} \sum_{t=1}^{T} y_t$ , refer to related descriptions of the first intermediate matrix in the foregoing step 1101d. Details are not described herein again.

$\overline{Y}_1^H$ is conjugate transposition of $\overline{Y}_1$ . The fourth covariance matrix $R_{ul1}$ is a covariance matrix of channels between the first nonlinear interference source and the receive antennas. I is an M*M-dimensional identity matrix.

Step 1101g: Perform normalization processing on the second intermediate matrix, to obtain a first signal receive weight.

$$Z_{ul1} = \frac{Z''_{ul1}}{\left|Z''_{ul1}\right|}$$

The first signal receive weight meets $Z_{ul1} = \dfrac{Z''_{ul1}}{\left|Z''_{ul1}\right|}$ .

$Z_{ul1}$ is the first signal receive weight, and $|Z''_{ul1}|$ is a modulo operation of $Z''_{ul1}$ .

1102: Determine the first initial precoding weight based on the first signal receive weight.

In step 1102, the communication device determines the first initial precoding weight based on the first signal receive weight in a plurality of manners. The following shows several possible implementations. It should be noted that the implementations shown in the following are merely an example, and do not constitute a limitation on this application. This application is still applicable to other implementations.

The following describes Implementation 1 with reference to 1102a and 1102b.

Step 1102a: Perform conjugate processing on the first signal receive weight $Z_{ul1}$ , to obtain a third intermediate matrix $Z^*_{ul1}$ .

$Z^*_{ul1}$ is an M* 1-dimensional matrix, and M is a quantity of receive antennas.

Step 1102b: Use the third intermediate matrix $Z^*_{ul1}$ as the first initial precoding weight.

In some implementations, the foregoing Implementation 1 is applicable to a scenario in which a quantity of receive antennas of the communication device is consistent with a quantity of transmit antennas of the communication device, and positions of the receive antennas are consistent with positions of the transmit antennas.

The following describes Implementation 2 with reference to 1102c to 1102e.

Step 1102c: Perform conjugate processing on the first signal receive weight $Z_{ul1}$ , to obtain a third intermediate matrix $Z*_{ul1}$ .

$Z*_{ul1}$ is an M* 1-dimensional matrix. An element corresponding to an $r^{th}$ row in $Z*_{ul1}$ is an element corresponding to an $r^{th}$ receive antenna of the communication device, r is an integer greater than or equal to 1 and less than or equal to M, and M is the quantity of receive antennas.

Step 1102d: Determine a receive antenna closest to each transmit antenna.

Step 1102e: Use an element in a third intermediate matrix $Z*_{ul1}$ corresponding to the receive antenna closest to each transmit antenna as an element that corresponds to the transmit antenna and that is in the first initial precoding weight.

For example, the first initial precoding weight is the initial precoding weight $P_{dl1}$ corresponding to the first signal transmission direction. An element corresponding to a $w^{th}$ row in $P_{dl1}$ is an element corresponding to a $w^{th}$ transmit antenna, and $P_{dl1}$ is an N* 1-dimensional matrix. N is the quantity of transmit antennas, and w is an integer greater than or equal to 1 and less than or equal to N.

The following describes a process in which the communication device determines an element in $P_{dl1}$ .

The communication device separately searches for a receive antenna closest to each transmit antenna in the N transmit antennas. The communication device uses an element that corresponds to a receive antenna closest to the transmit antenna and that is in the third intermediate matrix $Z*_{ul1}$ as an element that corresponds to the transmit antenna and that is in $P_{dl1}$.

For example, the communication device searches for a receive antenna v closest to a transmit antenna w. In this case, the communication device may determine $Z_{dl1}(w) = P_{dl1}(v)$. $Z_{dl1}(w)$ is an element that corresponds to a $w^{th}$ receive antenna and that is in the third intermediate matrix $Z*_{ul1}$, and $P_{dl1}(v)$ is an element that corresponds to a $v^{th}$ transmit antenna and that is in $P_{dl1}$. w is an integer greater than or equal to 1 and less than or equal to N. v is an integer greater than or equal to 1 and less than or equal to M.

In some implementations, the foregoing Implementation 2 is applicable to a scenario in which the quantity of transmit antennas of the communication device is not equal to the quantity of receive antennas of the communication device. The foregoing Implementation 2 is also applicable to a scenario in which the positions of the transmit antennas of the communication device are inconsistent with the positions of the receive antennas of the communication device.

The following describes Implementation 3 with reference to 1102f and 1102g.

Step 1102f: Multiply the first signal receive weight $Z_{ul1}$ by a fourth transformation matrix D, to obtain D* $Z_{ul1}$.

The fourth transformation matrix D is a relationship that is between the first signal receive weight and an initial precoding weight and that is determined based on the fourth simulation data. The fourth simulation data includes a plurality of groups of historical signal receive weights and historical initial precoding weights that are obtained through traversal of a plurality of nonlinear interference scenarios and simulation. For related descriptions of the nonlinear interference scenario, refer to the related descriptions in the embodiment shown in FIG. 3. Details are not described herein again.

For example, the plurality of nonlinear interference scenarios are traversed to obtain the fourth simulation data. The fourth simulation data includes $P_{dl}^{(i)}$ and $Z_{ul}^{(i)}$ . A value of i is an integer between [1, S5], S5 is a quantity of statistical samples, and S5 is an integer greater than 1. Then, $v_{vec,dl}^{(i)} = vec(P_{dl}^{(i)})$ , and $z_{vec,ul}^{(i)} = vec(Z_{ul}^{(i)})$ . $v_{vec,dl}^{(i)}$ is obtained through matrix vectorization processing on $P_{dl}^{(i)}$ . $z_{vec,ul}^{(i)}$ is obtained through matrix vectorization processing on $Z_{ul}^{(i)}$ . In this case, $D= [v_{vec,dl}^{(1)},...v_{vec,dl}^{(T)}] [z_{vec,ul}^{(1)},...z_{vec,ul}^{(T)}]^{+}$ , and $[z_{vec,ul}^{(1)},...z_{vec,ul}^{(T)}]^{+}$ represents a pseudo-inverse operation on a matrix $[v_{vec,dl}^{(1)},...v_{vec,dl}^{(T)}]$ . In this case, $D*Z_{ul1} = [v_{vec,dl}^{(1)},...v_{vec,dl}^{(T)}] [z_{vec,ul}^{(1)},...z_{vec,ul}^{(T)}]^{+} * Z_{ul1}$ .

Step 1102g: Perform conjugate processing on D* $Z_{ul1}$, to obtain the first initial precoding weight.

For example, the first initial precoding weight is the initial precoding weight $P_{dl1}$ corresponding to the first signal transmission direction. $P_{dl1} = (D * Z_{ul1})*$.

The foregoing Implementation 3 is applicable to a relatively large quantity of scenarios. For example, the foregoing Implementation 3 is applicable to a scenario in which the quantity of transmit antennas of the communication device is equal to or not equal to the quantity of receive antennas of the communication device. For example, the foregoing Implementation 3 is applicable to a scenario in which the positions of the transmit antennas of the communication device are consistent with or inconsistent with the positions of the receive antennas of the communication device.

Corresponding to the methods provided in the foregoing method embodiments, an embodiment of this application further provides a corresponding apparatus. The apparatus includes corresponding modules configured to perform the foregoing embodiments. The modules may be software, hardware, or a combination of software and hardware.

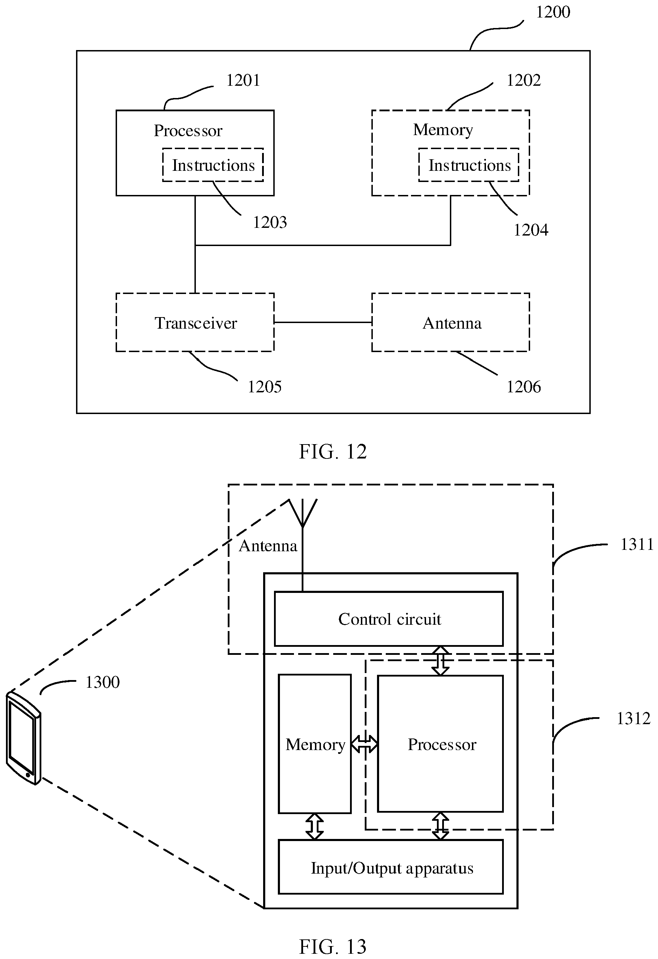

FIG. 12 is a schematic diagram of a structure of a communication processing apparatus. The communication processing apparatus 1200 may be a network device, may be a terminal device, may be a chip, a chip system, a processor, or the like that supports the network device in implementing the foregoing methods, or may be a chip, a chip system, a processor, or the like that supports the terminal device in implementing the foregoing methods. The communication processing apparatus 1200 may be configured to implement the methods described in the foregoing method embodiments. For details, refer to the descriptions in the foregoing method embodiments.

The communication processing apparatus 1200 may include one or more processors 1201. The processor 1201 may also be referred to as a processing unit, and can implement a specific control function. The processor 1201 may be a general-purpose processor, a dedicated processor, or the like. For example, the processor 1201 may be a baseband processor or a central processing unit. The baseband processor may be configured to process a communication protocol and communication data. The central processing unit may be configured to: control the communication processing apparatus (for example, a base station, a baseband chip, a terminal, a terminal chip, a distributed unit (distributed unit, DU), or a central unit (central unit, CU)), execute a software program, and process data of the software program.

In an optional design, the processor 1201 may also store instructions and/or data 1203, and the instructions and/or data 1203 may be run by the processor, so that the communication processing apparatus performs the methods described in the foregoing method embodiments.

In another optional design, the processor 1201 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication processing apparatus 1200 may include a circuit, and the circuit may implement the sending, receiving, or communication function in the foregoing method embodiments.

Optionally, the communication processing apparatus 1200 may include one or more memories 1202. The memory may store instructions 1204, and the instructions may be run on the processor, so that the communication processing apparatus 1200 performs the methods described in the foregoing method embodiments. Optionally, the memory may further store data. Optionally, the processor may also store instructions and/or data. The processor and the memory may be separately disposed, or may be integrated together.

Optionally, the communication processing apparatus 1200 may further include a transceiver 1205 and/or an antenna 1206. The processor 1201 may be referred to as a processing unit, and controls the communication processing apparatus 1200. The transceiver 1205 may be referred to as a transceiver unit, a transceiver machine, a transceiver circuit, a transceiver apparatus, a transceiver module, or the like, and is configured to implement sending and receiving functions.

Optionally, the communication processing apparatus 1200 in this embodiment of this application may be configured to perform the methods described in FIG. 2A, FIG. 2B, FIG. 3, FIG. 5A, FIG. 5B, FIG. 8, FIG. 9, FIG. 10, and FIG. 11 in embodiments of this application, or may be configured to perform the methods in various implementations corresponding to the method embodiments corresponding to FIG. 2A, FIG. 2B, FIG. 3, FIG. 5A, FIG. 5B, FIG. 8, FIG. 9, FIG. 10, and FIG. 11 and the methods in which the implementations are combined.

The processor and the transceiver that are described in this application may be implemented on an integrated circuit (integrated circuit, IC), an analog IC, a radio frequency integrated circuit RFIC, a mixed signal IC, an application specific integrated circuit (application specific integrated circuit, ASIC), a printed circuit board (printed circuit board, PCB), an electronic device, or the like. The processor and the transceiver may alternatively be manufactured with various IC process technologies, for example, a complementary metal oxide semiconductor (complementary metal oxide semiconductor, CMOS), an N-metal-oxide-semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication processing apparatus in the foregoing embodiment may be a network device or a terminal device. However, a scope of the communication processing apparatus described in this application is not limited thereto, and the structure of the communication processing apparatus may not be limited by FIG. 12. The communication processing apparatus may be an independent device or may be a part of a large device. For example, the communication processing apparatus may be:

(1) an independent integrated circuit IC, a chip, or a chip system or subsystem;
(2) a set of one or more ICs, where optionally, the IC set may also include a storage component configured to store data and/or instructions;

(3) an ASIC, for example, a modem (MSM);
(4) a module that may be embedded in another device, for example, a BBU in a base station, or an AAU and a BBU in a base station; or
(5) a receiver, a terminal, an intelligent terminal, a cellular phone, a wireless device, a handset, a mobile unit, a vehicular device, a network device, a cloud device, an artificial intelligence device, a machine device, a home device, a medical device, an industrial device, or the like.

An embodiment of this application further provides a communication processing apparatus. The communication processing apparatus may be a terminal device, and the terminal device may be configured to perform the communication processing methods shown in the foregoing method embodiments. The following provides a schematic diagram of a possible structure of the terminal device.

FIG. 13 is a schematic diagram of a structure of a terminal device according to this application. For ease of description, FIG. 13 shows only main components of the terminal device. As shown in FIG. 13, the terminal device 1300 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in a form of an electromagnetic wave by using the antenna. When data is sent to the terminal device, the radio frequency circuit receives a radio frequency signal by using the antenna. The radio frequency signal is further converted into a baseband signal, and the baseband signal is output to the processor. The processor converts the baseband signal into data, and processes the data.

For ease of description, FIG. 13 shows only one memory and one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data. The central processing unit is mainly configured to control the entire terminal device, execute a software program, and process data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected with various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1311 of the terminal device 1300, and the processor that has a processing function may be considered as a processing unit 1312 of the terminal device 1300. As shown in FIG. 13, the terminal device 1300 includes the transceiver unit 1311 and the processing unit 1312. The transceiver unit may also be referred to as a transceiver, a transceiver machine, a transceiver apparatus, or the like. Optionally, a component that is configured to implement a receiving function and that is in the transceiver unit 1311 may be considered as a receiving unit, and a component that is configured to implement a sending function and that is in the transceiver unit 1311 may be considered as a sending unit. That is, the transceiver unit 1311 includes the receiving unit and the sending unit. For example, the receiving unit may also be referred to as a receiver, a receiver circuit, or the like, and the sending unit may be referred to as a transmitter, a transmitter circuit, or the like. Optionally, the receiving unit and the sending unit may be one integrated unit, or may be a plurality of independent units. The receiving unit and the sending unit may be located at one geographical position, or may be distributed at a plurality of geographical positions.

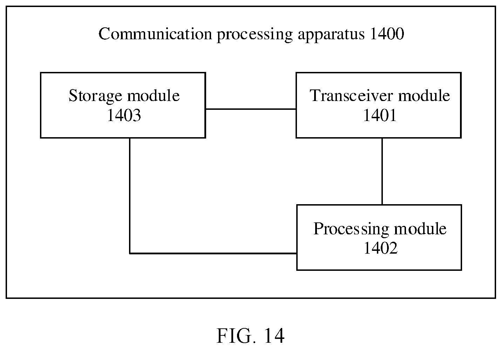

FIG. 14 is a schematic diagram of another structure of a communication processing apparatus according to an embodiment of this application. The communication processing apparatus 1400 may be a terminal device, or may be a component (for example, an integrated circuit or a chip) of the terminal device. Alternatively, the communication processing apparatus 1400 may be a network device or a component (for example, an integrated circuit or a chip) of the network device. The communication processing apparatus 1400 may alternatively be another communication module, configured to implement the methods in the method embodiments of this application. The communication processing apparatus 1400 may include a processing module 1402 (or referred to as a processing unit). Optionally, the communication processing apparatus 1400 may further include a transceiver module 1401 (or referred to as a transceiver unit) and a storage module 1403 (or referred to as a storage unit).

In a possible design, one or more modules in FIG. 14 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication processing apparatus 1400 has a function of implementing the terminal described in embodiments of this application. For example, the communication processing apparatus 1400 includes a corresponding module, unit, or means (means) used by the terminal device to perform the steps related to the terminal device and described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments. Alternatively, the communication processing apparatus 1400 has a function of implementing the network device described in embodiments of this application. For example, the communication processing apparatus 1400 includes a corresponding module, unit, or means (means) used by the network device to perform the steps related to the network device and described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

Optionally, the modules in the communication processing apparatus 1400 in this embodiment of this application may be configured to perform the methods described in FIG. 2A, FIG. 2B, FIG. 3, FIG. 5A, FIG. 5B, FIG. 8, FIG. 9, FIG. 10, and FIG. 11 in embodiments of this application, or may be configured to perform the methods in various implementations corresponding to the method embodiments corresponding to FIG. 2A, FIG. 2B, FIG. 3, FIG. 5A, FIG. 5B, FIG. 8, FIG. 9, FIG. 10, and FIG. 11 and the methods in which the implementations are combined.

In a possible design, a communication processing apparatus 1400 includes a processing module 1401.

The processing module 1401 is configured to: generate at least two first signals based on a first precoding weight, where the first precoding weight is related to first nonlinear interference channel information, the first nonlinear interference channel information is determined based on a first nonlinear interference signal, and the first nonlinear interference signal is a nonlinear interference signal obtained through excitation of a first nonlinear interference source by at least two second signals; and output the at least two first signals, where the at least two first signals are used to excite a second nonlinear interference signal. The second nonlinear interference signal is the nonlinear interference signal obtained through excitation of the second nonlinear interference source by the at least two first signals.

In a possible design, a communication processing apparatus 1400 includes a processing module 1401 and a transceiver module 1402.

The processing module 1401 is configured to generate at least two first signals based on a first precoding weight, where the first precoding weight is related to first nonlinear interference channel information, the first nonlinear interference channel information is determined based on a first nonlinear interference signal, and the first nonlinear interference signal is a nonlinear interference signal obtained through excitation of a first nonlinear interference source by at least two second signals.

The transceiver module 1402 is configured to output the at least two first signals, where the at least two first signals are used to excite a second nonlinear interference signal. The second nonlinear interference signal is the nonlinear interference signal obtained through excitation of the second nonlinear interference source by the at least two first signals.

Optionally, the transceiver module 1402 is further configured to:

receive the second nonlinear interference signal; and
the processing module 1401 is further configured to:
determine second nonlinear interference channel information based on the second nonlinear interference signal.

Optionally, the first nonlinear interference source is partially or completely the same as the second nonlinear interference source.

Optionally, the first nonlinear interference channel information indicates a first covariance matrix, the first covariance matrix is a covariance matrix of channels between transmit antennas and the first nonlinear interference source, the first covariance matrix is an N*N-dimensional matrix, N is a quantity of the transmit antennas, N is an integer greater than or equal to 2, and the first precoding weight is obtained based on the first covariance matrix.

Optionally, the first nonlinear interference channel information indicates a first interference space, the first interference space is a channel space between transmit antennas and the first nonlinear interference source, and the first precoding weight is obtained based on the first interference space.

Optionally, the first nonlinear interference channel information indicates a first interference channel, the first interference channel is a channel between transmit antennas and the first nonlinear interference source, and the first precoding weight is obtained based on the first interference channel.

Optionally, the transceiver module 1402 is specifically configured to:

> when a first condition is met, output the second nonlinear interference channel information, where
> the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

Optionally, the processing module 1401 is further configured to:

> when a first condition is not met, generate at least two third signals based on a second precoding weight, where the second precoding weight is related to the second nonlinear interference channel information;
> the transceiver module 1402 is further configured to:

>> output the at least two third signals, where
>> the at least two third signals are used to excite a third nonlinear interference signal, and the third nonlinear interference signal is a nonlinear interference signal obtained through excitation of a third nonlinear interference source by the at least two third signals;
>> receive the third nonlinear interference signal; and
>> the processing module 1401 is further configured to:

>>> determine third nonlinear interference channel information based on the third nonlinear interference signal, where
>>> the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

Optionally, the first precoding weight is obtained based on a first initial precoding weight and a first interference weight, and the first initial precoding weight and the first interference weight are obtained based on the first nonlinear interference channel information.

Optionally, the processing module 1401 is further configured to:

> if a first condition is not met, generate at least two fourth signals based on a third precoding weight, where the third precoding weight is related to the second nonlinear interference channel information;
> the transceiver module 1402 is further configured to:

>> output the at least two fourth signals, where
>> the at least two fourth signals are used to excite a fourth nonlinear interference signal, and the fourth nonlinear interference signal is a nonlinear interference signal obtained through excitation of a fourth nonlinear interference source by the at least two fourth signals;
>> receive the fourth nonlinear interference signal; and
>> the processing module 1401 is further configured to:

> obtain fourth nonlinear interference channel information based on the fourth nonlinear interference signal, where the first condition includes at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

Optionally, the processing module 1401 is further configured to:

when nonlinear interference channel information in N signal transmission directions is not obtained, generate at least two fifth signals based on a fourth precoding weight, where each signal transmission direction corresponds to one precoding weight, the fourth precoding weight is related to the first nonlinear interference channel information, and N is a quantity of transmit antennas;
the transceiver module 1402 is further configured to:
output the at least two fifth signals, where
the at least two fifth signals are used to excite a fifth nonlinear interference signal, and the fifth nonlinear interference signal is a nonlinear interference signal obtained through excitation of a fifth nonlinear interference source by the at least two fifth signals;
receive the fifth nonlinear interference signal; and
the processing module 1401 is further configured to:
determine fifth nonlinear interference channel information based on the fifth nonlinear interference signal.

Optionally, the first nonlinear interference channel information indicates a first covariance matrix, the first covariance matrix is a covariance matrix of channels between transmit antennas and the first nonlinear interference source, the first covariance matrix is an N*N matrix, N is the quantity of the transmit antennas, N is an integer greater than or equal to 2, and the first initial precoding weight is obtained based on the first covariance matrix.

Optionally, the first nonlinear interference channel information indicates a first interference space, the first interference space is an interference space of channels between transmit antennas and the first nonlinear interference source, and the first initial precoding weight is obtained based on the first interference space.

Optionally, the first nonlinear interference channel information indicates a first interference channel, the first interference channel is a channel between transmit antennas and the first nonlinear interference source, and the first initial precoding weight is obtained based on the first interference channel.

Optionally, the first initial precoding weight is obtained based on the first nonlinear interference signal.

Optionally, the second nonlinear interference channel information indicates at least one of the following:

a second covariance matrix, a third covariance matrix, a second interference space, a third interference space, a second interference channel, and a third interference channel, where
the second covariance matrix is a covariance matrix of channels between the transmit antennas and the second nonlinear interference source, and the third covariance matrix is a covariance matrix of channels between the second nonlinear interference source and receive antennas;
the second interference space is a channel space between the transmit antennas and the second nonlinear interference source, and the third interference space is a channel space between the second nonlinear interference source and the receive antennas; and
the second interference channel is a channel between the transmit antennas and the second nonlinear interference source, and the third interference channel is a channel between the second nonlinear interference source and the receive antennas.

Optionally, the processing module 1401 is further configured to:
avoid, based on the second nonlinear interference channel information, the second nonlinear interference source during signal transmission; or skip receiving a signal on a frequency on which the second nonlinear interference signal is located; or determine, based on the second nonlinear interference channel information, frequency bands to which different users belong, and schedule corresponding users by using the frequency bands.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by hardware or software depends on particular applications and design requirements of the entire system. A person skilled in the art may use various methods to implement the functions for corresponding applications, but it should not be considered that the implementation goes beyond the protection scope of embodiments of this application.

It may be understood that, the processor in embodiments of this application may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component.

The solutions described in this application may be implemented in various manners. For example, the technologies may be implemented by hardware, software, or a combination of hardware and software. For hardware implementation, a processing unit configured to implement these technologies at a communication apparatus (for example, a base station, a terminal, a network entity, or a chip) may be implemented in one or more general-purpose processors, a DSP, a digital signal processor, an ASIC, a programmable logic device, an FPGA or another programmable logic apparatus, a discrete gate or transistor logic device, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification is intended to include but is not limited to these memories and a memory of any another proper type.

This application further provides a computer-readable medium storing a computer program. When the computer program is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, procedures or functions according to embodiments of this application are entirely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a data subscriber line (digital subscriber line, DSL)) or wireless (for example, infrared, wireless, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

It may be understood that "an embodiment" mentioned in the entire specification means that particular features, structures, or characteristics related to the embodiment are included in at least one embodiment of this application. Therefore, embodiments in the entire specification do not necessarily mean a same embodiment. In addition, these particular features, structures, or characteristics may be combined in one or more embodiments in any appropriate manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

"Simultaneously" in this application may be understood as being at a same time point, may be understood as being within a time period, or may be understood as being within a same cycle.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" in this specification may be usually used interchangeably in this specification.

The term "at least one of" or "at least one type of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information. The term "and/or" in this specification describes only an association relationship between associated objects and represents that three relationships may exist. For example, A and/or B may represent the following three cases: only A exists, both A and B exist, and only B exists. A may be singular or plural, and B may be singular or plural. The character "/" generally indicates an "or" relationship between the associated objects.

A person of ordinary skill in the art may understand that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing systems, apparatuses, and units, refer to a corresponding process in the foregoing method embodiments. Details are not described herein again.

It may be understood that the systems, the apparatus, and the methods described in this application may alternatively be implemented in another manner. For example, the described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/implementation methods in embodiments, unless otherwise specified or a logic conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logic relationship thereof. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A communication processing method, wherein the method comprises:

   generating at least two first signals based on a first precoding weight, wherein the first precoding weight is related to first nonlinear interference channel information, the first nonlinear interference channel information is determined based on a first nonlinear interference signal, and the first nonlinear interference signal is a nonlinear interference signal obtained through excitation of a first nonlinear interference source by at least two second signals; and
   outputting the at least two first signals, wherein
   the at least two first signals are used to excite a second nonlinear interference signal, and the second nonlinear interference signal is a nonlinear interference signal obtained through excitation of a second nonlinear interference source by the at least two first signals.

2. The method according to claim 1, wherein the method further comprises:

   receiving the second nonlinear interference signal; and
   determining second nonlinear interference channel information based on the second nonlinear interference signal.

3. The method according to claim 1 or 2, wherein the first nonlinear interference source is partially or completely the same as the second nonlinear interference source.

4. The method according to any one of claims 1 to 3, wherein the first nonlinear interference channel information indicates a first covariance matrix, the first covariance matrix is a covariance matrix of channels between transmit antennas and the first nonlinear interference source, the first covariance matrix is an N*N-dimensional matrix, N is a quantity of the transmit antennas, N is an integer greater than or equal to 2, and the first precoding weight is obtained based on the first covariance matrix.

5. The method according to any one of claims 1 to 3, wherein the first nonlinear interference channel information indicates a first interference space, the first interference space is a channel space between transmit antennas and the first nonlinear interference source, and the first precoding weight is obtained based on the first interference space.

6. The method according to any one of claims 1 to 3, wherein the first nonlinear interference channel information indicates a first interference channel, the first interference channel is a channel between transmit antennas and the first nonlinear interference source, and the first precoding weight is obtained based on the first interference channel.

7. The method according to any one of claims 2 to 6, wherein the method further comprises:

   when a first condition is met, outputting the second nonlinear interference channel information, wherein
   the first condition comprises at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

8. The method according to any one of claims 2 to 6, wherein the method further comprises:

   when a first condition is not met, generating at least two third signals based on a second precoding weight, wherein the second precoding weight is related to the second nonlinear interference channel information;
   outputting the at least two third signals, wherein
   the at least two third signals are used to excite a third nonlinear interference signal, and the third nonlinear interference signal is a nonlinear interference signal obtained through excitation of a third nonlinear interference source by the at least two third signals;
   receiving the third nonlinear interference signal; and

determining third nonlinear interference channel information based on the third nonlinear interference signal, wherein

the first condition comprises at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

9. The method according to any one of claims 1 to 3, wherein the first precoding weight is obtained based on a first initial precoding weight and a first interference weight, and the first initial precoding weight and the first interference weight are obtained based on the first nonlinear interference channel information.

10. The method according to claim 9, wherein the method further comprises:

if a first condition is not met, generating at least two fourth signals based on a third precoding weight, wherein the third precoding weight is related to the second nonlinear interference channel information;
outputting the at least two fourth signals, wherein
the at least two fourth signals are used to excite a fourth nonlinear interference signal, and the fourth nonlinear interference signal is a nonlinear interference signal obtained through excitation of a fourth nonlinear interference source by the at least two fourth signals;
receiving the fourth nonlinear interference signal; and
obtaining fourth nonlinear interference channel information based on the fourth nonlinear interference signal, wherein
the first condition comprises at least one of the following: a quantity of iteration times corresponding to the second nonlinear interference channel information is greater than or equal to a first preset threshold, and an absolute value of a power difference between the first nonlinear interference signal and the second nonlinear interference signal is less than or equal to a second preset threshold.

11. The method according to claim 9 or 10, wherein the method further comprises:

when nonlinear interference channel information in N signal transmission directions is not obtained, generating at least two fifth signals based on a fourth precoding weight, wherein each signal transmission direction corresponds to one precoding weight, the fourth precoding weight is related to the first nonlinear interference channel information, and N is a quantity of transmit antennas;
outputting the at least two fifth signals, wherein
the at least two fifth signals are used to excite a fifth nonlinear interference signal, and the fifth nonlinear interference signal is a nonlinear interference signal obtained through excitation of a fifth nonlinear interference source by the at least two fifth signals;
receiving the fifth nonlinear interference signal; and
determining fifth nonlinear interference channel information based on the fifth nonlinear interference signal.

12. The method according to any one of claims 9 to 11, wherein the first nonlinear interference channel information indicates a first covariance matrix, the first covariance matrix is a covariance matrix of channels between the transmit antennas and the first nonlinear interference source, the first covariance matrix is an N*N matrix, N is the quantity of the transmit antennas, N is an integer greater than or equal to 2, and the first initial precoding weight is obtained based on the first covariance matrix.

13. The method according to any one of claims 9 to 11, wherein the first nonlinear interference channel information indicates a first interference space, the first interference space is an interference space between the transmit antennas and the first nonlinear interference source, and the first initial precoding weight is obtained based on the first interference space.

14. The method according to any one of claims 9 to 11, wherein the first nonlinear interference channel information indicates a first interference channel, the first interference channel is a channel between the transmit antennas and the first nonlinear interference source, and the first initial precoding weight is obtained based on the first interference channel.

15. The method according to any one of claims 9 to 11, wherein the first initial precoding weight is obtained based on the first nonlinear interference signal.

16. The method according to any one of claims 2 to 15, wherein the second nonlinear interference channel information indicates at least one of the following:

    a second covariance matrix, a third covariance matrix, a second interference space, a third interference space, a second interference channel, and a third interference channel, wherein
    the second covariance matrix is a covariance matrix of channels between the transmit antennas and the second nonlinear interference source, and the third covariance matrix is a covariance matrix of channels between the second nonlinear interference source and receive antennas;
    the second interference space is a channel space between the transmit antennas and the second nonlinear interference source, and the third interference space is a channel space between the second nonlinear interference source and the receive antennas; and
    the second interference channel is a channel between the transmit antennas and the second nonlinear interference source, and the third interference channel is a channel between the second nonlinear interference source and the receive antennas.

17. A communication processing apparatus, comprising a processor, wherein the processor is coupled to a memory, and the memory is configured to store a program or instructions, and when the program or the instructions are executed by the processor, the communication processing apparatus is enabled to perform the method according to any one of claims 1 to 16.

18. A communication processing apparatus, wherein the communication processing apparatus comprises modules configured to perform the method according to any one of claims 1 to 16.

19. A computer-readable medium, configured to store a computer program or instructions, wherein when the computer program or the instructions are executed, a computer is enabled to perform the method according to any one of claims 1 to 16.

Nonlinear source

Downlink signal
sending

Nonlinear interference
signal receiving

Terminal device 1

Terminal device 2

Network
device 1

FIG. 1A

Downlink
signal sending

Nonlinear source

Network
device 1

Nonlinear interference
signal receiving

Terminal device 1

Network
device 2

Terminal device 2

FIG. 1B

Generate at least two first signals based on a first precoding weight — 201

Output the at least two first signals — 202

Receive a second nonlinear interference signal — 203

Determine second nonlinear interference channel information based on the second nonlinear interference signal — 204

FIG. 2A

Determine a third covariance matrix based on a second nonlinear interference signal — 2041

Determine a third interference space and a third interference channel based on the third covariance matrix — 2042

Determine a second covariance matrix based on the third covariance matrix — 2043

Determine a second interference space — 2044

Determine a second interference channel — 2045

FIG. 2B

EP 4 318 995 A1

```
┌─────────────────────────────────────────────────────────┐  ┌─ 301
│  Generate at least two first signals based on a first    │──┘
│                    precoding weight                       │
└─────────────────────────────────────────────────────────┘
                            │
                            ▼
┌─────────────────────────────────────────────────────────┐  ┌─ 302
│           Output the at least two first signals          │──┘
└─────────────────────────────────────────────────────────┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ┐  ┌─ 303
    Receive a second nonlinear interference signal         ──┘
└ ─ ─ ─ ─ ─ ─ ─ ─ ─ ─ ─ ─ ─ ─ ─ ─ ─ ─ ─ ─ ─ ─ ─ ─ ─ ─ ─ ┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ┐  ┌─ 304
  Determine second nonlinear interference channel information based on ──┘
           the second nonlinear interference signal
└ ─ ─ ─ ─ ─ ─ ─ ─ ─ ─ ─ ─ ─ ─ ─ ─ ─ ─ ─ ─ ─ ─ ─ ─ ─ ─ ─ ┘
                            │
                            ▼
  No                  ◇ Determine whether a first condition is met ◇     ┌─ 305
  ┌──────────────────                                                ──┘
  │                         │ Yes
  │                         ▼
  │     ┌ ─ ─ ─ ─ ─ ─ ─ ─ ─ ─ ─ ─ ─ ─ ─ ─ ─ ─ ─ ─ ─ ─ ─ ┐  ┌─ 306
  │       Generate at least two third signals based on a second precoding weight ──┘
  │     └ ─ ─ ─ ─ ─ ─ ─ ─ ─ ─ ─ ─ ─ ─ ─ ─ ─ ─ ─ ─ ─ ─ ─ ┘
  │                         │
  │                         ▼
  │     ┌ ─ ─ ─ ─ ─ ─ ─ ─ ─ ─ ─ ─ ─ ─ ─ ─ ─ ─ ─ ─ ─ ─ ─ ┐  ┌─ 307
  │          Output the at least two third signals           ──┘
  │     └ ─ ─ ─ ─ ─ ─ ─ ─ ─ ─ ─ ─ ─ ─ ─ ─ ─ ─ ─ ─ ─ ─ ─ ┘
  │                         │
  │                         ▼
  │     ┌ ─ ─ ─ ─ ─ ─ ─ ─ ─ ─ ─ ─ ─ ─ ─ ─ ─ ─ ─ ─ ─ ─ ─ ┐  ┌─ 308
  │         Receive a third nonlinear interference signal     ──┘
  │     └ ─ ─ ─ ─ ─ ─ ─ ─ ─ ─ ─ ─ ─ ─ ─ ─ ─ ─ ─ ─ ─ ─ ─ ┘
  │                         │
  │                         ▼
  │     ┌ ─ ─ ─ ─ ─ ─ ─ ─ ─ ─ ─ ─ ─ ─ ─ ─ ─ ─ ─ ─ ─ ─ ─ ┐  ┌─ 309
  │       Determine third nonlinear interference channel information based on ──┘
  │              the third nonlinear interference signal
  │     └ ─ ─ ─ ─ ─ ─ ─ ─ ─ ─ ─ ─ ─ ─ ─ ─ ─ ─ ─ ─ ─ ─ ─ ┘
  │     ┌ ─ ─ ─ ─ ─ ─ ─ ─ ─ ─ ─ ─ ─ ─ ─ ─ ─ ─ ─ ─ ─ ─ ─ ┐  ┌─ 310
  └────▶   Output the second nonlinear interference channel information ──┘
        └ ─ ─ ─ ─ ─ ─ ─ ─ ─ ─ ─ ─ ─ ─ ─ ─ ─ ─ ─ ─ ─ ─ ─ ┘
```

FIG. 3

42

Measured error between a spatial direction and an actual spatial direction of a nonlinear interference source

Index of the nonlinear interference source

FIG. 4

Generate at least two first signals based on a first precoding weight — 501

Output the at least two first signals — 502

Receive a second nonlinear interference signal — 503

Determine second nonlinear interference channel information based on the second nonlinear interference signal — 504

Determine whether nonlinear inference channel information in N signal transmission directions is obtained — 505

Yes

No

Generate at least two fifth signals based on a fourth precoding weight — 506

Output the at least two fifth signals — 507

Receive a fifth nonlinear interference signal — 508

Determine third nonlinear interference channel information based on the fifth nonlinear interference signal — 509

Output the second nonlinear interference channel information — 510

FIG. 5A

Generate at least two first signals based on a first precoding weight — 501

Output the at least two first signals — 502

Receive a second nonlinear interference signal — 503

Determine second nonlinear interference channel information based on the second nonlinear interference signal — 504

Determine whether a first condition is met — 504a

Yes

No

Generate at least two fourth signals based on a third precoding weight — 504b

Output the at least two fourth signals — 504c

Receive a fourth nonlinear interference signal — 504d

Determine fourth nonlinear interference channel information based on the fourth nonlinear interference signal — 504e

Output the second nonlinear interference channel information — 504f

FIG. 5B

Measured error between a spatial direction and an actual spatial direction of a nonlinear interference source

FIG. 6

Measured error between a spatial direction and an actual spatial direction of a nonlinear interference source

Index of the nonlinear interference source

FIG. 7

Perform singular value decomposition on a first covariance matrix, to obtain a first left singular matrix of the first covariance matrix — 801

Select the first column vector from the first left singular matrix, and perform conjugation processing on the first column vector, to obtain a first initial precoding weight — 802

FIG. 8

Select the first column vector from a first interference space, and perform conjugation processing on the first column vector, to obtain a first initial precoding weight — 901

FIG. 9

Select the first column vector from a first interference channel — 1001

Perform conjugation processing on the first column vector, and then perform normalization processing, to obtain a first initial precoding weight — 1002

FIG. 10

Determine a first signal receive weight based on a first nonlinear interference signal — 1101

Determine a first initial precoding weight based on the first signal receive weight — 1102

FIG. 11

1200

1201

Processor

Instructions

1203

1202

Memory

Instructions

1204

Transceiver

1205

Antenna

1206

FIG. 12

1311

Antenna

Control circuit

1300

Memory

Processor

1312

Input/Output apparatus

FIG. 13

Communication processing apparatus 1400

Storage module
1403

Transceiver module
1401

Processing module
1402

FIG. 14

## INTERNATIONAL SEARCH REPORT

International application No.

**PCT/CN2022/091129**

### A. CLASSIFICATION OF SUBJECT MATTER

H04L 1/00(2006.01)i; H04W 52/02(2009.01)i; H04B 1/10(2006.01)i

According to International Patent Classification (IPC) or to both national classification and IPC

### B. FIELDS SEARCHED

Minimum documentation searched (classification system followed by classification symbols)

H04L1/-; H04W52/-; H04B1/-

Documentation searched other than minimum documentation to the extent that such documents are included in the fields searched

Electronic data base consulted during the international search (name of data base and, where practicable, search terms used)

CNABS; CNTXT; CNKI: 非线性干扰, PIM, 无源互调, 激励, 激发, 干扰源, 信道, 信息, 干扰空间, 协方差矩阵, 预编码, 第二, 迭代, 重复, 反馈; VEN; USTXT; EPTXT; WOTXT; 3GPP: PIM, passive inter-modulation, passive intermodulation, nonlinear+, non-linear+, interfer+, space, channel, information, covariance, matrix, precod+, pre-cod+, second, iterat+, repeat +, feedback+

### C. DOCUMENTS CONSIDERED TO BE RELEVANT

| Category* | Citation of document, with indication, where appropriate, of the relevant passages | Relevant to claim No. |
|---|---|---|
| A | CN 112205056 A (TELEFONAKTIEBOLAGET LM ERICSSON (PUBL)) 08 January 2021 (2021-01-08) entire document | 1-19 |
| A | US 2013223555 A1 (INTERDIGITAL PATENT HOLDINGS, INC.) 29 August 2013 (2013-08-29) entire document | 1-19 |
| A | WO 2021079322 A1 (TELEFONAKTIEBOLAGET LM ERICSSON (PUBL)) 29 April 2021 (2021-04-29) entire document | 1-19 |
| A | CN 111465042 A (HUAWEI TECHNOLOGIES CO., LTD.) 28 July 2020 (2020-07-28) entire document | 1-19 |
| A | CN 108988935 A (TSINGHUA UNIVERSITY) 11 December 2018 (2018-12-11) entire document | 1-19 |

☑ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **04 July 2022** | **27 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 318 995 A1

<table>
<tr><td colspan="2" align="center">**INTERNATIONAL SEARCH REPORT**</td><td>International application No.<br>**PCT/CN2022/091129**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | CN 111937318 A (TELEFONAKTIEBOLAGET LM ERICSSON (PUBL)) 13 November 2020 (2020-11-13)<br>entire document | 1-19 |
| A | 杨丽 (YANG, Li). "一种抑制通信基站无源互调干扰的算法 (An Algorithm for Suppressing Passive Intermodulation Interference of Communication Basestation)"<br>通信技术 (Communications Technology), Vol. 52, No. 11, 10 November 2019 (2019-11-10), ISSN: 1002-0802,<br>pp. 2633-2636 | 1-19 |
| A | HUAWEI. "R4-122480 "TP for BS PIM scenarios""<br>3GPP tsg_ran\WG4_Radio, 14 May 2012 (2012-05-14),<br>pp. 1-4 | 1-19 |

Form PCT/ISA/210 (second sheet) (January 2015)

**INTERNATIONAL SEARCH REPORT**
Information on patent family members

International application No.

**PCT/CN2022/091129**

| Patent document cited in search report | | | Publication date (day/month/year) | Patent family member(s) | | | Publication date (day/month/year) |
|---|---|---|---|---|---|---|---|
| CN | 112205056 | A | 08 January 2021 | WO | 2019220179 | A1 | 21 November 2019 |
| | | | | EP | 3794893 | A1 | 24 March 2021 |
| | | | | US | 2021185692 | A1 | 17 June 2021 |
| US | 2013223555 | A1 | 29 August 2013 | WO | 2012031098 | A1 | 08 March 2012 |
| | | | | US | 9438320 | B2 | 06 September 2016 |
| WO | 2021079322 | A1 | 29 April 2021 | | None | | |
| CN | 111465042 | A | 28 July 2020 | US | 2021352693 | A1 | 11 November 2021 |
| | | | | EP | 3890390 | A1 | 06 October 2021 |
| | | | | WO | 2020151433 | A1 | 30 July 2020 |
| | | | | CN | 111465042 | B | 14 January 2022 |
| | | | | EP | 3890390 | A4 | 09 February 2022 |
| CN | 108988935 | A | 11 December 2018 | CN | 108988935 | B | 25 September 2020 |
| CN | 111937318 | A | 13 November 2020 | WO | 2019220180 | A1 | 21 November 2019 |
| | | | | US | 2020382188 | A1 | 03 December 2020 |
| | | | | EP | 3794740 | A1 | 24 March 2021 |

Form PCT/ISA/210 (patent family annex) (January 2015)

## REFERENCES CITED IN THE DESCRIPTION

**Patent documents cited in the description**

- CN 202110560345